(19) **Europäisches Patentamt / European Patent Office / Office européen des brevets**

(11) **EP 4 576 766 A1**

(12) **EUROPEAN PATENT APPLICATION**
published in accordance with Art. 153(4) EPC

(43) Date of publication:
**25.06.2025 Bulletin 2025/26**

(21) Application number: **23853998.5**

(22) Date of filing: **25.05.2023**

(51) International Patent Classification (IPC):
**H04N 13/161** (2018.01)

(52) Cooperative Patent Classification (CPC):
**H04N 19/157; H04N 19/13; H04N 19/597;
H04N 19/60; H04N 19/70; H04N 19/91; H04N 19/96**

(86) International application number:
**PCT/CN2023/096242**

(87) International publication number:
**WO 2024/037091 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.08.2022 CN 202211001666**

(71) Applicant: **Tencent Technology (Shenzhen)
Company Limited
Shenzhen, Guangdong 518057 (CN)**

(72) Inventor: **ZHU, Wenjie
Shenzhen, Guangdong 518057 (CN)**

(74) Representative: **Nederlandsch Octrooibureau
P.O. Box 29720
2502 LS The Hague (NL)**

(54) **POINT CLOUD PROCESSING METHOD AND APPARATUS, COMPUTER DEVICE, AND STORAGE MEDIUM**

(57) Embodiments of the present application provide a point cloud processing method and apparatus, a computer device, and a storage medium. The point cloud processing method comprises: in a decoding stage, acquiring encoded data of a point cloud, and parsing the encoded data to obtain shift data, wherein the shift data is obtained by performing shift processing on target encoding information of the point cloud in an encoding process of the point cloud; and performing shift reconstruction on the shift data to obtain reconstruction encoding information of the target encoding information. The point cloud processing method comprises: in an encoding stage, acquiring target encoding information of a point cloud, and performing shift processing on the target encoding information to obtain shift data of the target encoding information; and encoding the shift data. According to the embodiments of the present application, shift processing is performed on the target encoding information, so that the amount of data needing to be encoded in the encoding stage of the point cloud can be reduced, the amount of data needing to be decoded in the decoding stage of the point cloud can be reduced, and thus, the encoding and decoding efficiency of the point cloud can be improved.

S701 Oobtain coded data of a point cloud

S702 Analyze the coded data to obtain shift data, the shift data being obtained by performing shift processing on target coding information of the point cloud in an encoding process of the point cloud

S703 Perform shift reconstruction on the shift data to obtain reconstructed coding information of the target coding information

FIG. 7

**Description**

RELATED APPLICATION

This application claims priority to Chinese Patent Application No. 202211001666X, entitled "POINT CLOUD PROCESSING METHOD AND APPARATUS, COMPUTER DEVICE, AND STORAGE MEDIUM" filed with the China National Intellectual Property Administration on August 19, 2022.

FIELD OF THE TECHNOLOGY

This application relates to the field of computer technologies, and specifically, to a point cloud encoding and decoding technology.

BACKGROUND OF THE DISCLOSURE

With the continuous development of science and technology, a large quantity of high-precision point clouds may be obtained at low costs and in a short time period. The point cloud may include a plurality of points, and each point in the point cloud has geometric information and attribute information, which is referred to as point cloud related information. Before the point cloud is transmitted, encoding processing is usually required to be performed on the point cloud related information, to improve efficiency of transmitting the point cloud. Specifically, an encoder side may transmit coded information to a decoder side after encoding the point cloud related information, and the decoder side may decode the coded information to reconstruct the point cloud related information. However, in actual applications, efficiency of encoding and decoding the point cloud is usually not so high because of a large data volume of the point cloud related information.

SUMMARY

Embodiments of this application provide a point cloud processing method and apparatus, a computer device, and a storage medium, to improve efficiency of encoding and decoding a point cloud.

According to an aspect, an embodiment of this application provides a point cloud processing method, performed by a computer device. The point cloud processing method includes:

obtaining coded data of a point cloud;

analyzing the coded data to obtain shift data, the shift data being obtained by performing shift processing on target coding information of the point cloud in an encoding process of the point cloud; and

performing shift reconstruction on the shift data to obtain reconstructed coding information of the target coding information.

In this embodiment of this application, after the coded data of the point cloud is obtained, the coded data is analyzed to obtain the shift data. The shift data is obtained by performing shift processing on the target coding information of the point cloud in the encoding process of the point cloud. Shift reconstruction is performed on the shift data to obtain the reconstructed coding information of the target coding information. According to this embodiment of this application, shift processing is performed on the target coding information, so that a data volume required to be decoded in a decoding phase of the point cloud can be reduced, and efficiency of decoding the point cloud can be improved.

According to another aspect, an embodiment of this application provides a point cloud processing method, performed by a computer device. The point cloud processing method includes:

obtaining target coding information of a point cloud;

obtaining a coding mode;

performing shift processing on the target coding information based on the coding mode to obtain shift data of the target coding information; and

encoding the shift data.

In this embodiment of this application, after the target coding information of the point cloud is obtained, shift processing may be performed on the target coding information to obtain the shift data of the target coding information, and then the shift data may be encoded. According to this embodiment of this application, shift processing is performed on the target coding information, so that a data volume required to be encoded in an encoding phase of the point cloud can be reduced, and efficiency of encoding the point cloud can be improved.

Correspondingly, an embodiment of this application provides a point cloud processing apparatus. The point cloud processing apparatus includes:

an obtaining unit, configured to obtain coded data of a point cloud; and

a processing unit, configured to analyze the coded data to obtain shift data, the shift data being obtained by performing shift processing on target coding information of the point cloud in an encoding process of the point cloud.

The processing unit is further configured to perform shift reconstruction on the shift data to obtain reconstructed coding information of the target coding information.

Correspondingly, an embodiment of this application provides a point cloud processing apparatus. The point cloud processing apparatus includes:

an obtaining unit, configured to obtain target coding information of a point cloud,

the obtaining unit being further configured to obtain a coding mode; and

a processing unit, configured to perform shift processing on the target coding information based on the coding mode to obtain shift data of the target coding information.

The processing unit is further configured to encode the shift data.

Correspondingly, an embodiment of this application provides a computer device. The computer device includes a processor and a computer-readable storage medium.

The processor is configured to implement a computer program.

The computer-readable storage medium stores the computer program. The computer program is configured for the processor to load and execute to implement the point cloud processing method.

Correspondingly, an embodiment of this application provides a computer-readable storage medium. The computer-readable storage medium stores a computer program. The computer program, when read and executed by a processor of a computer device, enables the computer device to perform the point cloud processing method.

Correspondingly, an embodiment of this application provides a computer program product or computer program. The computer program product or computer program includes computer instructions. The computer instructions are stored in a computer-readable storage medium. A processor of a computer device reads the computer instructions from the computer-readable storage medium. The processor executes the computer instructions to enable the computer device to perform the point cloud processing method.

In the embodiments of this application, shift processing is performed on the target coding information, so that the data volume required to be encoded in the encoding phase of the point cloud and the data volume required to be decoded in the decoding phase of the point cloud can be reduced, and efficiency of encoding and decoding the point cloud can be improved.

BRIEF DESCRIPTION OF THE DRAWINGS

FIG. 1a is a schematic flowchart of a point cloud coding according to an embodiment of this application.

FIG. 1b is another schematic flowchart of point cloud coding according to an embodiment of this application.

FIG. 2 is a schematic diagram of a bounding box according to an embodiment of this application.

FIG. 3 is a schematic diagram of octree coding according to an embodiment of this application.

FIG. 4 is a schematic diagram of a block structure coding according to an embodiment of this application.

FIG. 5a is a schematic diagram of a predictive tree coding structure according to an embodiment of this application.

FIG. 5b is a schematic diagram of another predictive tree coding structure according to an embodiment of this application.

FIG. 6 is a schematic diagram of a structure of a point cloud processing system according to an embodiment of this application.

FIG. 7 is a schematic flowchart of a point cloud processing method according to an embodiment of this application.

FIG. 8 is a schematic flowchart of another point cloud processing method according to an embodiment of this application.

FIG. 9 is a schematic diagram of a structure of a point cloud processing apparatus according to an embodiment of this application.

FIG. 10 is a schematic diagram of a structure of a computer device according to an embodiment of this application.

DESCRIPTION OF EMBODIMENTS

The following clearly and completely describes the technical solutions in the embodiments of this application with reference to the accompanying drawings in the embodiments of this application. It is clear that the described embodiments are merely some but not all of the embodiments of this application. All other embodiments obtained by a person of ordinary skill in the art based on the embodiments of this application without creative efforts shall fall within the protection scope of this application.

Basic concepts involved in the embodiments of this application are first described herein, to more clearly understand the technical solutions provided in the embodiments of this application.

(1) Point cloud: The point cloud is a set of discrete points which are irregularly distributed in space and express a spatial structure and a surface attribute of a three-dimensional (3D) object or a three-dimensional scene. The point cloud may be classified into different categories according to different classification standards. For example, the point cloud may be classified as a dense point cloud or a sparse point cloud based on a manner for obtaining the point cloud. For another example, the point cloud may be classified as a static point cloud or a dynamic point cloud based on a timing type of the point cloud.

(2) Point cloud data: Geometric information and attribute information of each point in the point cloud form the point cloud data. The geometric information may also be referred to as 3D location information. Geometric information of a specific point in the point cloud is spatial coordinates (x, y, z) of the point, and may include coordinate values of the point in respective coordinate axis directions of a 3D coordinate system, for example, a coordinate value x in an X-axis direction, a coordinate value y in a Y-axis direction, and a coordinate value z in a Z-axis direction. Attribute information of a specific point in the point cloud may include at least one of the following: color information, material information, and laser reflection intensity information (also referred to as a reflectivity). Generally, each point in the point cloud has a same amount and type of attribute information. For example, each point in the point cloud may have two pieces of attribute information: the color information and a laser reflection intensity. For another example, each point in the point cloud may have three pieces of attribute information: the color information, the material information, and the laser reflection intensity information.

(3) Point cloud encoding (Point Cloud Compression, PCC): Point cloud encoding is a process of encoding the geometric information and the attribute information of each point in the point cloud to obtain a compressed bitstream. Point cloud encoding may include two main processes: geometric information coding and attribute information coding. At present, a mainstream point cloud encoding technology may be classified as geometry-based point cloud coding and projection-based point cloud coding based on different types of the point cloud. Geometry-based point cloud compression (G-PCC) in moving picture expert group (MPEG) (an international video and audio encoding and decoding standard) and a point cloud coding standard AVS-PCC in audio video coding standard (AVS) (a China national video encoding and decoding standard) are used herein as an example for description.

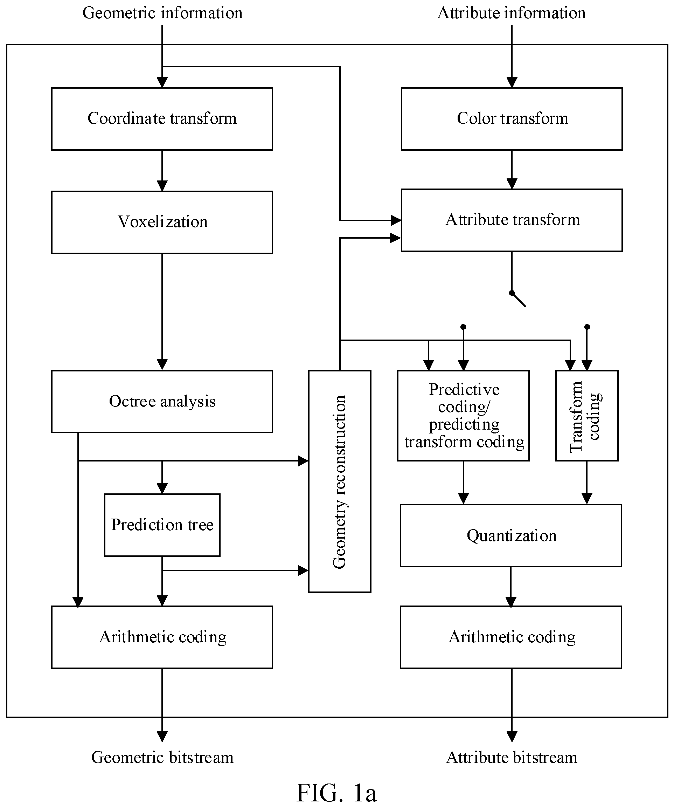

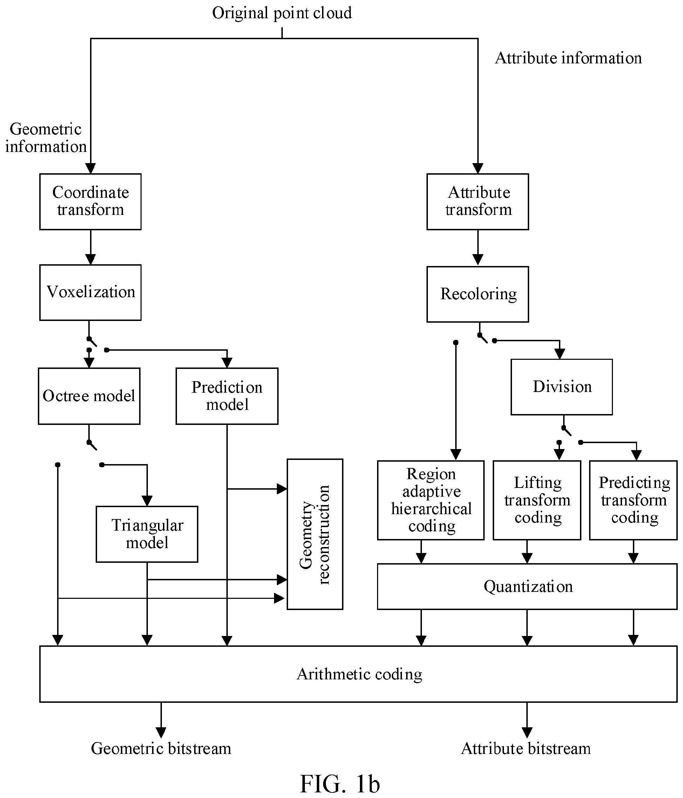

Coding frameworks of G-PCC and AVS-PCC are substantially the same. FIG. 1a shows the coding framework of AVS-PCC. FIG. 1b shows the coding framework of G-PCC. There may be a geometric information coding process and an attribute information coding process. In the geometric information coding process, the geometric information of each point in the point cloud is encoded to obtain a geometric bitstream. In the attribute information coding process, the attribute information of each point in the point cloud is encoded to obtain an attribute bitstream. The geometric bitstream and the attribute bitstream form the compressed bitstream of the point cloud.

For main operations and processing in the geometric information coding process, refer to the following descriptions.

First, pre-processing: pre-processing may include coordinate transformation (Transform coordinates) and voxelization (Voxelize). The point cloud data in 3D space is converted into an integral form through scaling and translation operations, and a minimum geometric location is moved to an origin of coordinates.

Second, geometry coding: Geometry coding may include two modes: octree-based geometry coding (Octree) and triangular-representation-based geometry coding (Trisoup). The two coding modes may be used under different conditions.

Octree-based geometry coding: An octree is a tree data structure. In division in the 3D space, a preset bounding box is divided evenly, and each node has eight child nodes. Whether each child node of the octree is occupied is indicated by "1" and "0" to obtain occupancy code information (Occupancy Code) as a bitstream of the geometric information of the point cloud.

Triangular-representation-based geometry coding: The point cloud is divided into blocks of a specific size, intersections of surfaces of the point cloud at edges of the blocks are located, and a triangle is constructed. The intersections are coded to implement compression of the geometric information.

Third, geometry quantification: Fineness of quantization is usually determined by a quantization parameter (QP). A larger value of the QP indicates that coefficients in a larger value range is to be quantized into a same output, which usually brings a greater distortion and a lower bit rate. On the contrary, a smaller value of the QP indicates that coefficients in a small value range are to be quantized into a same output, which usually brings a small distortion and a high code rate.

Fourth, geometry entropy coding: Statistical compression coding is performed for the occupancy code information of the octree, to finally output a binary (0 or 1) compressed bitstream. Statistical coding is a lossless coding mode capable of effectively reducing a bit rate required for expressing a same signal. A common statistical coding mode includes content adaptive binary arithmetic coding (CABAC).

For main operations and processing in the attribute information coding process, refer to the following descriptions.

First, attribute recoloring: In a case of lossy coding after the geometric information is coded, a coder side is required to decode and reconstruct the geometric information, that is, recover the geometric information of each point in the point cloud. Search is performed in the original point cloud for attribute information of one or more neighbor points corresponding to a specific reconstructed point in the recovered point cloud to obtain attribute information of the reconstructed point.

Second, attribute transform coding (Transform): Attribute transform coding may include three modes: predicting transform coding (Predicting Transform), lifting transform coding (Lifting Transform), and region adaptive hierarchical transform (RAHT) coding. The three coding modes may be used under different conditions.

Predicting transform coding: A sub-point set is selected based on a distance, and the point cloud is divided into a plurality of different levels (Level of Detail, LoD), to implement realize a rough to fine point cloud representation. Bottom-up prediction may be implemented between adjacent levels, that is, attribute information of a point introduced at a fine level is predicted by a neighbor point at a rough level, to obtain a corresponding residual signal. A point at a lowest level is used as reference information for coding.

Lifting transform coding: A neighborhood-point-based weight updating policy is introduced based on adjacent LoD prediction, a predicted attribute value of each point is finally obtained, and a corresponding residual signal is obtained.

RAHT coding: RAHT is performed on the attribute information to convert the signal into a transform domain, to obtain a transform coefficient.

Third, attribute information quantization (Attribute Quantification): Fineness of quantization is usually determined by a QP. Entropy coding is performed on a quantized residual value in predicting transform coding and lifting transform coding. Entropy coding is performed on a quantized transform coefficient in RAHT.

Fourth, attribute entropy coding: A quantized attribute residual signal or transform coefficient is generally finally compressed through run-length coding and arithmetic code. For a corresponding coding mode, information such as the QP is also coded through an entropy coder.

(4) Point cloud decoding: Point cloud decoding is a process of decoding the compressed bitstream obtained through point cloud encoding, to reconstruct the point cloud. In detail, point cloud decoding is a process of reconstructing the geometric information and the attribute information of each point in the point cloud based on the geometric bistream and the attribute bitstream in the compressed bitstream. After a decoder side obtains the compressed bitstream, for the geometric bitstream, entropy decoding is first performed to obtain quantized geometric information of each point in the point cloud, and then inverse quantization is performed to reconstruct the geometric information of each point in the point cloud. For the attribute bitstream, entropy decoding is first performed to obtain quantized prediction residual information or a quantized transform coefficient of each point in the point cloud. Then, inverse quantization is performed on the quantized prediction residual information to obtain reconstructed residual information, and inverse quantization is performed on the quantized transform coefficient to obtain a reconstructed transform coefficient. Inverse transform is performed on the reconstructed transform coefficient to obtain reconstructed residual information. The attribute information of each point in the point cloud may be reconstructed based on the reconstructed residual information of each point in the point cloud. Reconstructed attribute information of each point in the point cloud corresponds to the reconstructed geometric information one to one in order, to reconstruct the point cloud.

The above content describes the basic concepts involved in the embodiments of this application. The following describes basic technologies involved in the embodiments of this application.

**(1) Pre-processing**

Floating-point type coordinates of each point in an input point cloud are represented as $(x^m, y^m, z^m)$, where $m=0, ..., M-1$, and M is a quantity of points in the point cloud. A coordinate point $(x^{min}, y^{min}, z^{min})$ and a coordinate point $(x^{max}, y^{max}, z^{max})$ are represented as follows:

$$x^{min} = \min(x^0, x^1, ..., x^{M-1})$$

$$y^{min} = \min(y^0, y^1, ..., y^{M-1})$$

$$z^{min} = \min(z^0, z^1, ..., z^{M-1})$$

$$x^{max} = \max(x^0, x^1, ..., x^{M-1})$$

$$y^{max} = \max(y^0, y^1, ..., y^{M-1})$$

$$z^{max} = \max(z^0, z^1, ..., z^{M-1})$$

A function $\min(s^0, s^1, ..., s^{M-1})$ represents taking a minimum value of the current input, $\max(s^0, s^1, ..., s^{M-1})$ represents taking a maximum value of the current input.

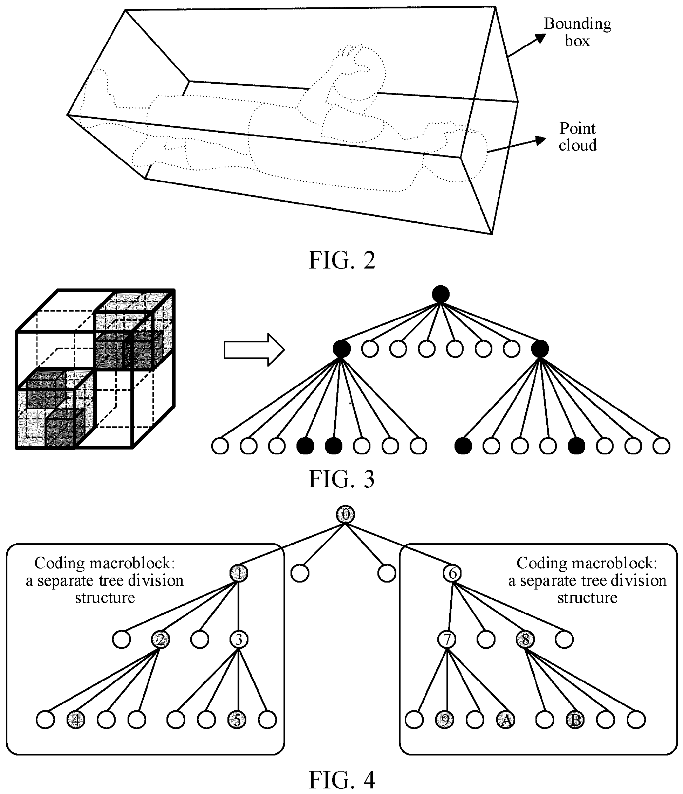

As shown in FIG. 2, a bounding box represents a smallest cuboid capable of containing all points in the input point cloud, and origin coordinates $(x^{origin}, y^{origin}, z^{origin})$ of the bounding box may be calculated as follows:

$$x^{origin} = \text{int}(\text{floor}(x^{min}))$$

$$y^{origin} = \text{int}(\text{floor}(y^{min}))$$

$$z^{origin} = \text{int}(\text{floor}(z^{min}))$$

Sizes of the bounding box in x, y, and z directions may be calculated as follows:

$$\text{BoudingBoxSize}_x = \text{int}(x^{max} - x^{origin}) + 1$$

$$\text{BoudingBoxSize}_y = \text{int}(y^{max} - y^{origin}) + 1$$

$$\text{BoudingBoxSize}_z = \text{int}(z^{max} - z^{origin}) + 1$$

Herein, int(s) is a rounding function, and a floor(s) function returns a maximum integral value less than or equal to s.

(2) Octree coding

Octree is a tree data structure. At present, a point cloud is mainly divided with an octree structure in G-PCC or AVS-PCC. For point cloud data in 3D space, octree division evenly divides a preset bounding box level by level, and each node has eight child nodes. Whether each child node of the octree is occupied is indicated by "1" and "0", as shown in FIG. 3, to obtain occupancy code information (occupancy code) as a bitstream of geometric information of the point cloud.

The octree is constructed based on a Morton order, that is, a Morton order table is queried to convert 3D coordinate information of the point cloud data into corresponding Morton code. A corresponding point at each level of the octree is obtained based on sorting of each piece of Morton code. At present, a mainstream point cloud coding technology represents the point cloud data with octree division, and uses different processing processes for geometric information and attribute information.

(3) Block structure coding

A concept similar to a coding block in video coding is introduced into a block structure coding method. The 3D space is divided into several non-overlapping coding macroblocks of a size of $(2^{d_x}, 2^{d_y}, 2^{d_z})$. Each coding macroblock is used as a basic coding unit. A size of the 3D macroblock may be controlled by setting an octree division depth d or through a parameter (nodeSizeLog2). When the octree is divided until a size of each node is $(2^{d_x}, 2^{d_y}, 2^{d_z})$, and the following condition is satisfied:

$$nodeSizeLog2 > \max(d_x, d_y, d_z)$$

For each node, coding is performed based on the coding macroblock (LCU). As shown in FIG. 4, coding is performed in sequence from a second level obtained through two-dimensional (2D) quadtree division based on the coding macroblock (LCU). Each coding macroblock may be considered as a separate tree division structure.

In current implementation, breadth first traversal is used inside each coding macroblock. This block structure coding method is highly flexible. In each coding macroblock, different geometry coding methods may be used based on a characteristic of the coding macroblock, or attribute coding may be performed after geometry coding of a macroblock is completed. In this way, attribute coding may be performed even if geometry coding of the entire point cloud is not ended.

(4) Predictive coding technology

All points in the point cloud are connected into a single predictive tree, and each point is predicted based on a signal value of a previous point. As an option of point cloud signal prediction, this method may be set to act on the entire original point cloud data, or may act on the child node of the octree or a subset of point cloud data obtained in another manner.

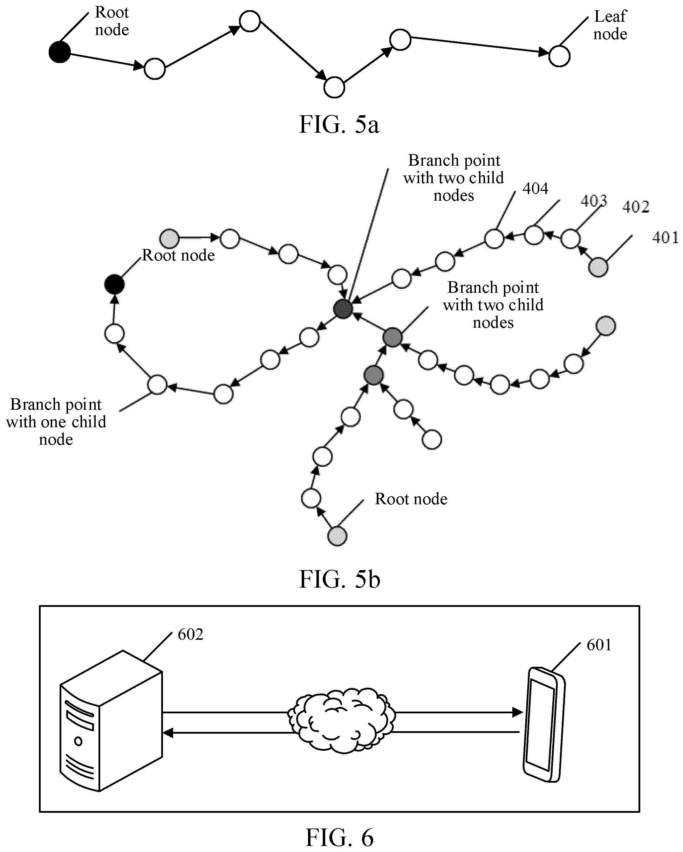

In addition, in an existing predictive coding technology in G-PCC, search is performed based on a distance between points to establish a predictive tree. FIG. 5a shows a prediction tree coding structure in AVS. A predictive tree shown in FIG. 5a is a single-chain predictive structure. FIG. 5b shows a predictive tree coding structure in MPEG. A predictive tree shown in FIG. 5b is a multi-chain predictive tree. Each point is connected to another point, and a quantity of points that each point is connected to and one of four prediction modes are indicated. The four prediction modes are as follows.

1. Prediction is not performed.

2. Prediction is performed with a parent node (a first-generation parent node), that is, a previous point. For example, for a point 401 in FIG. 5b, a point 402 is a parent node.

3. Prediction is performed with a parent node (a first-generation parent node) and a grandparent node (a second-generation parent node). For example, for a point 401 in FIG. 5b, a point 402 is a parent node, and a point 403 is a grandparent node.

4. Prediction is performed with a parent node (a first-generation parent node), a grandparent node (a second-generation parent node), and a grand-grandparent node (a third-generation parent node). For example, for a point 401 in FIG. 5b, a point 402 is a parent node, a point 403 is a grandparent node, and a point 404 is a grand-grandparent node.

(5) Entropy coding technology

The entropy coding technology is configured for binarizing and processing a quantized (lossy) signed attribute prediction residual or transform coefficient.

1. Variable length coding: Codewords with different lengths are configured for representing residuals or coefficients to be coded. A code length is required to be designed based on a probability of occurrence of a sign. Exponential-Golomb coding (Exp-Golomb) and arithmetic coding are commonly used.

Exponential-Golomb coding is a lossless data compression method, and obtains a variable length prefix code. A coding principle of a $K^{th}$-order (K is a nonnegative integer) exponential-Golomb coding mode is as follows: writing a digit in a binary form, removing the lowest K bits, and then adding 1; calculating a quantity of bits left, and subtracting 1 from the quantity of bits left to obtain a quantity of leading zeros required to be added; and recovering the lowest K bits removed in the first operation to a tail of a bit string. For example, second-order exponential-Golomb coding is performed on a digit "5" through the following process: writing the digit "5" as "101" in the binary form, removing the lowest two bits "10", with the high bit "1" left, and adding 1 to the high bit "1" to obtain "10", where a quantity of bits left is 2; subtracting 1 from the quantity of bits left to obtain a quantity of leading zeros required to be added, where one leading zero is required to be added; and recovering the lowest two bits removed in the first operation to a tail of a bit string, to obtain second-order exponential-Golomb code "01001" corresponding to the digit "5". A decoding process of the $K^{th}$-order exponential-Golomb coding mode is an inverse process of an encoding process of the $K^{th}$-order exponential-Golomb coding mode.

2. CABAC: CABAC may include the following several operations.

First, binarization: CABAC uses binary arithmetic coding, which means that only two digits (1 or 0) are coded. A non-binary numerical sign, for example, a transform coefficient or a motion vector, is first binarized or converted into a binary codeword before arithmetic coding. This process is similar to converting a value into a variable length codeword, but the binary codeword is further coded by an arithmetic coder before transmission.

Second, context model selection: A context model is a probabilistic model, which is a model selected based on statistics of a latest coded data symbol. This model stores a probability that each "bin" is 1 or 0.

Third, arithmetic coding: The arithmetic coder coding on each "bin" based on the selected probabilistic model.

Fourth, probability update: The selected context model may be updated based on an actual coded value. For example, if a value of "bin" is 1, a frequency count of 1 increases.

3. Run-length coding

A signal value such as the quantized (lossy) signed attribute prediction residual or transform coefficient is coded. A quantity of continuous points that are 0 in statistical data is denoted as a run-length. A residual value Res is used as an example. If Res is not zero, entropy coding is first performed on a value of the run-length, then entropy coding is performed on the non-zero attribute prediction residual, and the value of the run-length is set to 0 for recounting.

(6) Shift

A shift principle is translating a digit based on the binary form. Translation may include shift to left (<<) and shift to right (>>). Shift to left means shifting a binary digit to left based on a specified shift bit count, where shifted-out bits are discarded, and empty bits on the right formed through shift are filled with 0. Shift to right means shifting a binary digit to left based on a specified shift bit count, where shifted-out bits are discarded, and empty bits on the left formed through shift are filled with 0. A shift quotient and a shift remainder may be obtained after shift processing is performed on a binary digit. The binary digit may be reconstructed through shift based on the shift quotient and the shift remainder. The shift quotient is a result obtained by shifting the binary digit to right by a target bit count. The shift remainder is a binary difference between the binary digit and a result obtained by performing the shift quotient to left by a target bit count. For example, A=A1<<s+A2 indicates that a shift quotient A1 and a shift remainder A2 may be obtained by performing shift processing on A, and A may be reconstructed by adding the shift remainder A2 after the shift quotient A1 is shifted to left by a target bit count s.

Based on the foregoing related descriptions of the basic concepts and the basic technologies, the embodiments of this application provide a point cloud processing solution, to improve efficiency of encoding and decoding a point cloud. In the point cloud processing solution, in an encoding phase of a point cloud, for target coding information to be encoded in the point cloud, shift processing is performed on the target coding information, and data obtained by shifting the target coding information is encoded. In this way, a data volume required to be encoded in the encoding phase of the point cloud can be reduced, so that efficiency of encoding the point cloud can be improved. Correspondingly, in the point cloud processing solution, in a decoding phase of the point cloud, after the data obtained by shifting the target coding information is obtained through decoding, shift reconstruction may be performed on the data obtained by shifting the target coding information, to obtain reconstructed coding information of the target coding information. In this way, a data volume required to be decoded in the decoding phase of the point cloud can be reduced, so that efficiency of decoding the point cloud can be improved.

The point cloud processing solution provided in the embodiments of this application may be combined with technologies of cloud computing cloud storage, and the like in a cloud technology. Cloud computing is a computing mode. Cloud computing distributes computing tasks on a resource pool including a plenty of computers, such that various application systems can obtain computing power, storage space, and information services as required. Cloud computing may provide strong computing support for the encoding phase of the point cloud and the decoding phase of the point cloud. In this way, the efficiency of encoding the point cloud and efficiency of decoding the point cloud can be greatly improved. Cloud storage is a new concept extending and developing from the concept of cloud computing. A distributed cloud storage system (referred to as a storage system) is a storage system that integrates, by using functions of a cluster application, a grid technology, a distributed storage file system, and the like, various types of storage devices (the storage device is also referred to as a storage node) in a network through application software or application interfaces to work collaboratively to externally provide data storage and service accesses function. Cloud storage may provide strong storage support for the encoding phase of the point cloud and the decoding phase of the point cloud. In this way, the efficiency of encoding the point cloud and efficiency of decoding the point cloud can be further improved.

The following describes, with reference to FIG. 6, a cloud point processing system configured to implement the point cloud processing solution provided in the embodiments of this application. As shown in FIG. 6, the point cloud processing system may include an encoding device 601 and a decoding device 602. The encoding device 601 may be a terminal or a server. The decoding device 602 may be a terminal or a server. An example in which the encoding device 601 is a terminal and the decoding device 602 is a server is used in FIG. 6. A direct connection may be established between the encoding device 601 and the decoding device 602 in a wired communication manner. The terminal may be but is not limited to a smartphone, a tablet computer, a notebook computer, a desktop computer, a smart voice interaction device, a smartwatch, an in-vehicle terminal, a smart appliance, or a flight vehicle. The server may be an independent physical server, a server cluster or distributed system including a plurality of physical servers, or a cloud server providing a basic cloud computing service such as a cloud service, a cloud database, cloud computing a cloud function, cloud storage, a network service, cloud communication, a middleware service, a domain name service, a security service, a content delivery network (CDN), or a big data and artificial intelligence platform.

(1) For the encoding device 601

The encoding device 601 may obtain point cloud data (that is, geometric information and attribute information of each point in a point cloud). The point cloud data may be obtained through scene capture or generation by the device. Obtaining the point cloud data through scene capture means collecting a visual scene of a real world through a capture device associated with the encoding device 601, to obtain the point cloud data. The capture device is configured to provide a point cloud data obtaining service for the encoding device 601. The capture device may include but is not limited to any one of the following: a photographic device, a sensing device, and a scanning device. The photographic device may include an ordinary camera, a stereoscopic camera, a light field camera, and the like. The sensing device may include a laser device, a radar device, and the like. The scanning device may include a 3D laser scanning device and the like. The capture device associated with the encoding device 601 may be a hardware component arranged in the encoding device 601. For example, the capture device is a camera, a sensor, or the like of the terminal. Alternatively, the capture device associated with the encoding device 601 may be a hardware apparatus connected to the encoding device 601, for example, a camera connected to the server. Obtaining the point cloud data through generation by the device means that the encoding device 601 generates the point cloud data based on a virtual object (for example, a virtual 3D object and a virtual 3D scene that are obtained through 3D modeling).

The encoding device 601 may perform encoding processing on the geometric information of each point in the point cloud to obtain a geometric bitstream, and perform encoding processing on the attribute information of each point in the point cloud to obtain an attribute bitstream. The encoding device 601 may transmit both the geometric bitstream and the attribute bitstream that are obtained through encoding to the decoding device 602. In a geometry coding or attribute coding process, for target coding information to be encoded in the point cloud (which may be, for example, attribute information, attribute residual information, geometric information, geometric residual information, or run-length information, involved in the encoding process, of a to-be-encoded point in the point cloud), the encoding device 601 may perform shift processing on the target coding information, and encode a value obtained through shifting. In this way, a data volume required to be encoded in an encoding phase of the point cloud can be greatly reduced, so that efficiency of encoding the point cloud can be improved.

(2) For the decoding device 602

After receiving a compressed bitstream (that is, the attribute bitstream and the geometric bitstream) transmitted by the encoding device 601, the decoding device 602 may perform decoding processing on the geometric bitstream to reconstruct the geometric information of each point in the point cloud, and perform decoding processing on the attribute bitstream to reconstruct the attribute information of each point in the point cloud. In a geometry decoding or attribute decoding process, the decoding device 602 may perform shift reconstruction on data obtained through analysis to obtain reconstructed coding information of the target coding information. In this way, a data volume required to be decoded in a decoding phase of the point cloud can be greatly reduced, so that efficiency of decoding the point cloud can be improved.

In the embodiments of this application, the encoding device may perform shift processing on to-be-encoded information to reduce the data volume required to be encoded by the encoding device in the encoding phase of the point cloud, so that efficiency of the encoding device in encoding the point cloud can be improved. The decoding device may perform shift reconstruction on information obtained through analysis to reduce the data volume required to be decoded by the decoding point in the decoding phase of the point cloud, so that efficiency of the decoding device in decoding the point cloud can be improved. The point cloud processing system described in the embodiments of this application is intended to more clearly describe the technical solutions in the embodiments of this application, and does not constitute a limitation on the technical solutions provided in the embodiments of this application. A person of ordinary skill in the art may know that, with evolution of a system architecture and emergence of a new service scenario, the technical solutions provided in the embodiments of this application are also applicable to a similar technical problem.

The following describes the point cloud processing solution provided in the embodiments of this application in more details with reference to the accompanying drawings.

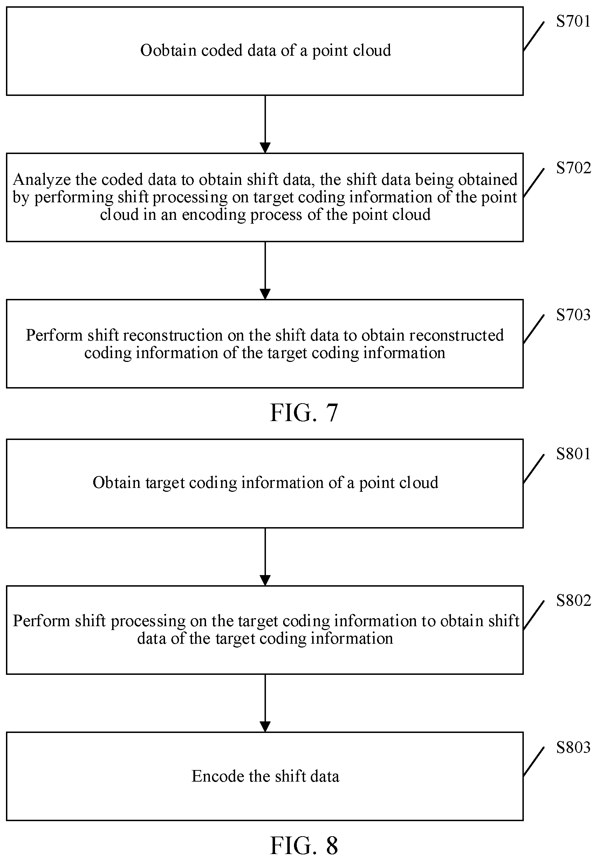

An embodiment of this application provides a point cloud processing method. In the point cloud processing method, a decoding process of target coding information at a decoder side is mainly described. The point cloud processing method may be performed by a computer device. The computer device may be the decoding device 602 in the foregoing point cloud processing system. As shown in FIG. 7, the point cloud processing method may include the following operation S701 to operation S703:

S701: Obtain coded data of a point cloud.

S702: Analyze the coded data to obtain shift data, the shift data being obtained by performing shift processing on target coding information of the point cloud in an encoding process of the point cloud.

In operation S701 and operation S702, in a decoding phase of the point cloud, the coded data of the point cloud may be obtained, and the coded data may be analyzed to obtain the shift data. In other words, the coded data may be obtained by encoding the shift data. The shift data may be obtained by performing shift processing on the target coding information of the point cloud in the encoding process of the point cloud.

The target coding information may be any point cloud related information required to be encoded in the encoding process of the point cloud. For example, in a geometry coding process, if geometry predictive coding is used, the target coding information may be any residual information of any point in the point cloud (which may specifically be, for example, geometric residual information of any point in a specific direction); if geometry transform coding is used, the target coding information may be a transform coefficient of geometric information of any point in the point cloud (which may specifically be, for example, a transform coefficient of geometric information of any point in a specific direction); or if geometry predicting transform coding is used, the target coding information may be any a transform coefficient of geometric residual information of any point in the point cloud (which may specifically be, for example, a transform coefficient of geometric residual information of any point in a specific direction). For another example, in an attribute coding process, if attribute predictive coding is used, the target coding information may be attribute residual information of any point in the point cloud; if attribute transform coding is used, the target coding information may be a transform coefficient of attribute information of any point in the point cloud; or if attribute predicting transform coding is used, the target coding information may be a transform coefficient of attribute residual information of any point in the point cloud. If run-length coding is used in the attribute coding process or the geometry coding process, the target coding information may be run-length information. The run-length information may be, for example, a zero-run-length value. The zero-run-length value may be a quantity of continuous points whose residual information or transform coefficients are 0 in the point cloud.

The coded data may be generated based on a coding mode. Analysis processes of the coded data in different coding modes are different. In other words, the coding mode is obtained, and the coded data is analyzed based on the coding mode to obtain the shift data. For a determining process of the coding mode, refer to the following descriptions. The coding mode may be set by default by an encoder side and a decoder side. Alternatively, the coding mode may be determined based on a coding mode obtained by analyzing a coding parameter set or a coded bitstream of the point cloud. Alternatively, an encoder side and a decoder side may determine the coding mode by using a default threshold parameter through mode determining information (which may be, for example, the target coding information, an occupancy bit of the target coding information, a QP of the target coding information, or bounding box information) and the threshold parameter. Alternatively, a coding parameter set or a coded bitstream is analyzed to obtain a threshold parameter, and the coding mode is determined based on mode determining information and the threshold parameter obtained through analysis.

For an application scope of the coding mode in the point cloud, refer to the following descriptions. The coding mode may be applied to the entire point cloud, that is, a same coding mode is configured for each point in the point cloud. Alternatively, the coding mode may be applied to a single point cloud slice, that is, a same coding mode is configured for each point in a same point cloud slice, where the point cloud slice may include one or more macroblocks. Alternatively, the coding mode may be applied to an entire macroblock, that is, a same coding mode is configured for each point in a same macroblock. Alternatively, the coding mode may be applied to an entire prediction tree, that is, a same coding mode is configured for each point in a same prediction tree. Alternatively, the coding mode may be applied to a single point in the point cloud. Alternatively, the coding mode may be applied to a specific direction (corresponding to the geometry coding process) of a single point.

The following mainly describes the analysis processes of the coded data in different coding modes.

(1) The coding mode may include a first coding mode. In the first coding mode, whether the target coding information is a specific value may be first determined. If the target coding information is not the specific value, it may indicate that shift processing is performed on the target coding information in the encoding process, and correspondingly, the shift data of the target coding information may be analyzed. The shift data may include a coding shift quotient and a coding shift remainder of the target coding information. In addition, before the coding shift quotient of the target coding information is analyzed, whether the coding shift quotient of the target coding information is a specific value may be first determined. If the coding shift quotient is not the specific value, the coding shift quotient of the target coding information may be analyzed.

In an actual analysis process of the coded data, whether the target coding information is the specific value may be identified by a coding information flag field. In other words, the coded data may include the coding information flag field, the coding information flag field may be analyzed, and whether an analytic value of the coding information flag field satisfies a shift analysis condition is determined, that is, whether the target coding information is the specific value is determined If the analytic value of the coding information flag field satisfies the shift analysis condition, it may indicate that the target coding information is not the specific value. In this case, the coded data may further include a shift quotient flag field. The shift quotient flag field may be configured for identifying whether the coding shift quotient of the target coding information is the specific value. The shift quotient flag field may be analyzed, and whether an analytic value of the shift quotient flag field satisfies an indirect analysis condition is determined, that is, whether the coding shift quotient of the target coding information is the specific value is determined. If the analytic value of the shift quotient flag field satisfies the indirect analysis condition, it may indicate that the coding shift quotient of the target coding information is not the specific value. In this case, the coded data may further include a coding result of the coding shift quotient and a coding result of the coding shift remainder. The coding result of the coding shift quotient may be analyzed to obtain the coding shift quotient. The coding result of the coding shift remainder may be analyzed to obtain the coding shift remainder.

(2) The coding mode may include a second coding mode. In the second coding mode, whether the target coding information is a specific value may be first determined. If the target coding information is not the specific value, it may indicate that shift processing is performed on the target coding information in the encoding process. In this case, the shift data of the target coding information may be analyzed. The shift data may include a coding shift quotient and a coding shift remainder of the target coding information.

In an actual analysis process of the coded data, whether the target coding information is the specific value may be identified by a coding information flag field. In other words, the coded data may include the coding information flag field, the coding information flag field may be analyzed, and whether an analytic value of the coding information flag field satisfies a shift analysis condition is determined, that is, whether the target coding information is the specific value is determined If the analytic value of the coding information flag field satisfies the shift analysis condition, it may indicate that the target coding information is not the specific value. In this case, the coded data may further include a coding result of the coding shift quotient and a coding result of the coding shift remainder. The coding result of the coding shift quotient may be analyzed to obtain the coding shift quotient. The coding result of the coding shift remainder may be analyzed to obtain the coding shift remainder.

(3) The coding mode may include a third coding mode. In the third coding mode, the shift data of the target coding information may be analyzed. The shift data of the target coding information may include a coding shift quotient and a coding shift remainder of the target coding information. Before the coding shift quotient of the target coding information is analyzed, whether the coding shift quotient of the target coding information is a specific value may be first determined. If the coding shift quotient is not the specific value, the coding shift quotient of the target coding information is analyzed.

In an actual analysis process of the coded data, whether the coding shift quotient of the target coding information is the specific value may be identified by a shift quotient flag field. In other words, the coded data may include the shift quotient flag field, the shift quotient flag field may be analyzed, and whether an analytic value of the shift quotient flag field satisfies an indirect analysis condition is determined, that is, whether the coding shift quotient of the target coding information is the specific value is determined. If the analytic value of the shift quotient flag field satisfies the indirect analysis condition, it may indicate that the coding shift quotient of the target coding information is not the specific value. In this case, the coded data may further include a coding result of the coding shift quotient and a coding result of the coding shift remainder. The coding result of the coding shift quotient may be analyzed to obtain the coding shift quotient. The coding result of the coding shift remainder may be analyzed to obtain the coding shift remainder.

(4) The coding mode may include a fourth coding mode. In the fourth coding mode, whether the target coding information is a specific value is not required to be determined, whether a coding shift quotient of the target coding information is a specific value is also not required to be determined, and the coding shift quotient and a coding shift remainder of the target coding information may be directly analyzed. In other words, the coded data may include a coding result of the coding shift quotient and a coding result of the coding shift remainder. The coding result of the coding shift quotient may be analyzed to obtain the coding shift quotient. The coding result of the coding shift remainder may be analyzed to obtain the coding shift remainder.

In both the first coding mode and the second coding mode, it is necessary to analyze the coding information flag field and determine whether the analytic value of the coding information flag field satisfies the shift analysis condition, that is, determine whether the target coding information is the specific value. If the analytic value of the coding information flag field satisfies the shift analysis condition, it may indicate that the target coding information is not the specific value, and the coding shift quotient and the coding shift remainder of the target coding information are required to be analyzed to reconstruct the target coding information; or if the analytic value of the coding information flag field does not satisfy the shift analysis condition, it may indicate that the target coding information is the specific value, the coding shift quotient and the coding shift remainder of the target coding information are not required to be analyzed, and reconstructed coding information of the target coding information may be directly determined to be the specific value. For details of analyzing the coding information flag field and determining whether the analytic value of the coding information flag field satisfies the shift analysis condition, refer to the following content.

A quantity of coding information flag fields may be m1, each coding information flag field corresponds to a different specific value, and m1 is a positive integer. An $i^{th}$ coding information flag field in the m1 coding information flag fields may be analyzed, i being a positive integer less than m1. If an analytic value of the $i^{th}$ coding information flag field is a first value (which may be, for example, 0), it may indicate that the target coding information is not an $i^{th}$ specific value, and an $(i+1)^{th}$ coding information flag field may continue to be analyzed; or if an analytic value of the $i^{th}$ coding information flag field is a second value (which may be, for example, 1), it may indicate that the target coding information is an $i^{th}$ specific value corresponding to the $i^{th}$ coding information flag field, the coding information flag field does not satisfy the shift analysis condition, the coding shift quotient and the coding shift remainder of the target coding information are not required to be analyzed, a subsequent coding information flag field of the $i^{th}$ coding information flag field may be stopped to be analyzed, and the reconstructed coding information of the target coding information may be directly determined to be the $i^{th}$ specific value.

When an $m1^{th}$ coding information flag field is analyzed, if an analytic value of the $m1^{th}$ coding information flag field is the first value, it may indicate that the target coding information is not an $m1^{th}$ specific value corresponding to the $m1^{th}$ coding information flag field, that is, it may be determined that the analytic value of the coding information flag field satisfies the shift analysis condition, and the coding shift quotient and the coding shift remainder of the target coding information are required to be analyzed; or if an analytic value of the $m1^{th}$ coding information flag field is the second value, it may indicate that the target coding information is an $m1^{th}$ specific value, the coding information flag field does not satisfy the shift analysis condition, the coding shift quotient and the coding shift remainder of the target coding information are not required to be analyzed, and the reconstructed coding information of the target coding information may be directly determined to be the $m1^{th}$ specific value. The $i^{th}$ specific value may be i-1, that is, the $m1^{th}$ specific value may be m1-1.

For example, when the quantity of coding information flag fields is 1, if the analytic value of the coding information flag field is 0, it may be determined that the target coding information is not a specific value 0, the analytic value of the coding information flag field satisfies the shift analysis condition, and the coding shift quotient and the coding shift remainder of the target coding information are required to be analyzed; or if the analytic value of the coding information flag field is 1, it may be determined that the target coding information is a specific value 0, the analytic value of the coding information flag field does not satisfy the shift analysis condition, the coding shift quotient and the coding shift remainder of the target coding information are not required to be analyzed, and the reconstructed coding information of the target coding information may be directly determined to be the specific value 0.

For another example, when a quantity of coding information flag fields is 3, if an analytic value of a first coding information flag field is 0, it may be determined that the target coding information is not a specific value 0, and a second coding information flag field may continue to be analyzed; or if an analytic value of a first coding information flag field is 1, it may be determined that the target coding information is a specific value 0, the analytic value of the coding information flag field does not satisfy the shift analysis condition, the coding shift quotient and the coding shift remainder of the target coding information are not required to be analyzed, and the reconstructed coding information of the target coding information may be directly determined to be the specific value 0. If an analytic value of the second coding information flag field is 0, it may be determined that the target coding information is not a specific value 1, and a third coding information flag field may continue to be analyzed; or if an analytic value of the second coding information flag field is 1, it may be determined that the target coding information is a specific value 1, the analytic value of the coding information flag field does not satisfy the shift analysis condition, the coding shift quotient and the coding shift remainder of the target coding information are not required to be analyzed, and the reconstructed coding information of the target coding information may be directly determined to be the specific value 1. If an analytic value of the third coding information flag field is 0, it may be determined that the target coding information is not a specific value 2, the analytic value of the coding information flag field satisfies the shift analysis condition, and the coding shift quotient and the coding shift remainder of the target coding information are required to be analyzed; or if an analytic value of the third coding information flag field is 1, it may be determined that the target coding information is a specific value 2, the analytic value of the coding information flag field does not satisfy the shift analysis condition, the coding shift quotient and the coding shift remainder of the target coding information are not required to be analyzed, and the reconstructed coding information of the target coding information may be directly determined to be the specific value 2.

In both the first coding mode and the third coding mode, it is necessary to analyze the shift quotient flag field and determine whether the analytic value of the shift quotient flag field satisfies the indirect analysis condition, that is, determine whether the coding shift quotient of the target coding information is the specific value. If the analytic value of the shift quotient flag field satisfies the indirect analysis condition, it may indicate that the coding shift quotient is not the specific value, and the coding shift quotient of the target coding information is required to be analyzed; or if the analytic value of the shift quotient flag field does not satisfy the indirect analysis condition, it may indicate that the coding shift quotient is the specific value, the coding shift quotient of the target coding information is not required to be analyzed, and the coding shift quotient may be directly determined to be the specific value. Similar to determining of the shift analysis condition, for details of analyzing the shift quotient flag field to determine whether the analytic value of the shift quotient flag field satisfies the indirect analysis condition, refer to the following content.

A quantity of shift quotient flag fields may be m2, each shift quotient flag field corresponds to a different specific value, and m2 is a positive integer. A $j^{th}$ shift quotient flag field in the m2 shift quotient flag fields may be analyzed, j being a positive integer less than m2. If an analytic value of the $j^{th}$ shift quotient flag field is a first value (which may be, for example, 0), it may indicate that the coding shift quotient is not a $j^{th}$ specific value corresponding to the $j^{th}$ shift quotient flag field, and a $(j+1)^{th}$ shift quotient flag field may continue to be analyzed; or if an analytic value of the $j^{th}$ shift quotient flag field is a second value (which may be, for example, 1), it may indicate that the coding shift quotient is a $j^{th}$ specific value corresponding to the $j^{th}$ shift quotient flag field, the shift quotient flag field does not satisfy the indirect analysis condition, the coding shift quotient of the target coding information is not required to be analyzed, a subsequent shift quotient flag field of the $j^{th}$ shift quotient flag field may be stopped to be analyzed, and the coding shift quotient may be directly determined to be the $j^{th}$ specific value.

When an $m2^{th}$ shift quotient flag field is analyzed, if an analytic value of the $m2^{th}$ shift quotient flag field is the first value, it may indicate that the coding shift quotient is not an $m2^{th}$ specific value corresponding to the $m2^{th}$ shift quotient flag field, that is, it may be determined that the analytic value of the coding information flag field satisfies the indirect analysis condition, and the coding shift quotient of the target coding information is required to be analyzed; or if an analytic value of the $m2^{th}$ shift quotient flag field is the second value, it may indicate that the coding shift quotient is an $m2^{th}$ specific value corresponding to the $m2^{th}$ shift quotient flag field, the shift quotient flag field does not satisfy the indirect analysis condition, the coding shift quotient of the target coding information is not required to be analyzed, and the coding shift quotient may be directly determined to be the $m2^{th}$ specific value. The $j^{th}$ specific value may be j-1, that is, the $m2^{th}$ specific value may be m2-1.

For example, when the quantity of shift quotient flag fields is 1, if the analytic value of the shift quotient flag field is 0, it may be determined that the coding shift quotient is not a specific value 0, the analytic value of the shift quotient flag field satisfies the indirect analysis condition, and the coding shift quotient of the target coding information is required to be analyzed; or if the analytic value of the shift quotient flag field is 1, it may be determined that the coding shift quotient is a specific value 0, the analytic value of the coding information flag field does not satisfy the indirect analysis condition, the coding shift quotient of the target coding information is not required to be analyzed, and the coding shift quotient may be directly determined to be the specific value 0.

For another example, when a quantity of shift quotient flag fields is 3, if an analytic value of a first shift quotient flag field is 0, it may be determined that the coding shift quotient is not a specific value 0, and a second shift quotient flag field may continue to be analyzed; or if an analytic value of a first shift quotient flag field is 1, it may be determined that the coding shift quotient is a specific value 0, the analytic value of the shift quotient flag field does not satisfy the indirect analysis condition, the coding shift quotient of the target coding information is not required to be analyzed, and the coding shift quotient may be directly determined to be the specific value 0. If an analytic value of the second shift quotient flag field is 0, it may be determined that the coding shift quotient is not a specific value 1, and a third shift quotient flag field may continue to be analyzed; or if an analytic value of the second shift quotient flag field is 1, it may be determined that the coding shift quotient is a specific value 1, the analytic value of the shift quotient flag field does not satisfy the indirect analysis condition, the coding shift quotient of the target coding information is not required to be analyzed, and the coding shift quotient may be directly determined to be the specific value 1. If an analytic value of the third shift quotient flag field is 0, it may be determined that the coding shift quotient is not a specific value 2, the analytic value of the shift quotient flag field satisfies the indirect analysis condition, and the coding shift quotient of the target coding information is required to be analyzed; or if an analytic value of the third shift quotient flag field is 1, it may be determined that the coding shift quotient is a specific value 2, the analytic value of the shift quotient flag field does not satisfy the indirect analysis condition, the coding shift quotient of the target coding information is not required to be analyzed, and the coding shift quotient may be directly determined to be the specific value 2.

In this case, after the coding shift quotient of the target coding information is obtained through analysis, the coding shift quotient may be updated with a target value associated with the $m2^{th}$ specific value. Update herein may specifically mean that an updated coding shift quotient is equal to the coding shift quotient before update plus the target value. The target value may specifically be the $m2^{th}$ specific value plus 1. For example, when the quantity of shift quotient flag fields is 1, the shift quotient flag field is configured for determining whether the coding shift quotient is the specific value 0, and if the analytic value of the shift quotient flag field satisfies the indirect analysis condition, that is, the coding shift quotient is not the specific value 0, the coding shift quotient may be updated with the coding shift quotient obtained through analysis plus 1 (0+1).

In the first coding mode to the fourth coding mode, the coding shift quotient of the target coding information may be analyzed mainly in any one of the following two modes. In a first mode, the coding result of the coding shift quotient may be analyzed based on an exponential-Golomb coding mode to obtain the coding shift quotient. An order for the exponential-Golomb coding mode herein may be a $K1^{th}$ order, K1 being a nonnegative integer. In a second mode, the coding result of the coding shift quotient may be analyzed based on a bit coding mode to obtain the coding shift quotient.

For the second mode (that is, the bit coding mode) for analyzing the coding shift quotient, the coding result of the coding shift quotient may include a coding result of an occupancy bit of the coding shift quotient and a code of each bit occupied by the coding shift quotient. A process of analyzing the coding result of the coding shift quotient based on the bit coding mode to obtain the coding shift quotient may include: analyzing the coding result of the occupancy bit of the coding shift quotient to obtain the occupancy bit of the coding shift quotient; analyzing the code of each bit occupied by the coding shift quotient to obtain a value of the code of each bit occupied by the coding shift quotient; and reconstructing the coding shift quotient based on the value of the code of each bit occupied by the coding shift quotient.

The occupancy bit of the coding shift quotient may be obtained through analysis in any one of the following modes.

First, the bit coding mode: The coding result of the occupancy bit may be analyzed based on the bit coding mode to obtain the occupancy bit. Specifically, the coding result of the occupancy bit may include a code of each bit occupied by the occupancy bit, and the code of each bit occupied by the occupancy bit may be analyzed bit by bit to reconstruct the occupancy bit. Second, the exponential-Golomb coding mode: The coding result of the occupancy bit may be analyzed based on the exponential-Golomb coding mode to obtain the occupancy bit of the coding shift quotient. The order for the exponential-Golomb coding mode herein may be a $K3^{th}$ order, K3 being a nonnegative integer. Third, a shift coding mode: the coding result of the occupancy bit may be analyzed based on the shift coding mode to obtain the occupancy bit of the coding shift quotient. Specifically, the coding result of the occupancy bit may include a coding result of an occupancy shift quotient of the occupancy bit and a coding result of an occupancy shift remainder, and the occupancy shift quotient and the occupancy shift remainder may be obtained by performing shift processing on the occupancy bit. Analyzing the coding result of the occupancy bit based on the shift coding mode to obtain the occupancy bit of the coding shift quotient may specifically include: analyzing the coding result of the occupancy shift quotient to obtain the occupancy shift quotient; analyzing the coding result of the occupancy shift remainder to obtain the occupancy shift remainder; and performing shift reconstruction processing on the occupancy shift quotient and the occupancy shift remainder to obtain the occupancy bit of the coding shift quotient.

The occupancy shift quotient and the occupancy shift remainder may be obtained through analysis in the bit coding mode or the exponential-Golomb coding mode. Specifically, for the occupancy shift quotient, the coding result of the occupancy shift quotient may be analyzed based on the bit coding mode, the coding result of the occupancy shift quotient may include a code of each bit occupied by the occupancy shift quotient, and the code of each bit occupied by the occupancy shift quotient may be analyzed bit by bit to reconstruct the occupancy shift quotient; or the coding result of the occupancy shift quotient may be analyzed based on the exponential-Golomb coding mode to obtain the occupancy shift quotient, where the order for the exponential-Golomb coding mode herein may be a K4$^{th}$ order, K4 being a nonnegative integer. For the occupancy shift remainder, the coding result of the occupancy shift remainder may be analyzed based on the bit coding mode, the coding result of the occupancy shift remainder may include a code of each bit occupied by the occupancy shift remainder, and the code of each bit occupied by the occupancy shift remainder may be analyzed bit by bit to reconstruct the occupancy shift remainder; or the coding result of the occupancy shift remainder may be analyzed based on the exponential-Golomb coding mode to obtain the occupancy shift remainder, where the order for the exponential-Golomb coding mode herein may be a K5$^{th}$ order, K5 being a nonnegative integer.

A process of performing shift reconstruction processing on the occupancy shift quotient and the occupancy shift remainder to obtain the occupancy bit of the coding shift quotient may be performed based on a shift bit count (the shift bit count herein may be a first shift bit count). In other words, shift processing (which may specifically be shift to left) may be performed on the occupancy shift quotient based on the shift bit count to obtain a shifted occupancy shift quotient, and then the shifted occupancy shift quotient and the occupancy shift remainder may be added to obtain a reconstructed occupancy bit.

In the first coding mode to the fourth coding mode, the coding shift remainder of the target coding information may be analyzed mainly in any one of the following two modes. First, the bit coding mode: The coding result of the coding shift remainder may be analyzed based on the bit coding mode, the coding result of the coding shift remainder may include a code of each bit occupied by the coding shift remainder, and the code of each bit occupied by the coding shift remainder may be analyzed bit by bit to reconstruct the coding shift remainder. Second, the exponential-Golomb coding mode: The coding result of the occupancy bit may be analyzed based on the exponential-Golomb coding mode to obtain the occupancy bit of the coding shift quotient, where the order for the exponential-Golomb coding mode herein may be a K2$^{th}$ order, K2 being a nonnegative integer.

S703: Perform shift reconstruction on the shift data to obtain the reconstructed coding information of the target coding information.

After the shift data is obtained through analysis, shift reconstruction may be performed on the shift data to obtain the reconstructed coding information of the target coding information. Specifically, the shift data may include the coding shift quotient and the coding shift remainder. The shift bit count (the shift bit count herein may be a second shift bit count) may be obtained. Shift processing (which may specifically be shift to left) may be performed on the coding shift quotient based on the shift bit count to obtain a shifted coding shift quotient. Then, the shifted coding shift quotient and the coding shift remainder are added to obtain the reconstructed coding information of the target coding information.

The shift bit count (which may be the foregoing first shift bit count or the foregoing second shift bit count) may be set by default by the encoder side and the decoder side. Alternatively, the shift bit count may be obtained by analyzing the coding parameter set or the coded bitstream of the point cloud. Alternatively, the shift bit count may be determined based on a shift bit count threshold parameter. Specifically, the shift bit count may be determined based on a magnitude relationship between shift bit count determining information and a shift bit count threshold. When the shift bit count determining information is less than or equal to the shift bit count threshold, it may be determined that the shift bit count is the first shift bit count (which may be, for example, two bits); or when the shift bit count determining information is greater than the shift bit count threshold, it may be determined that the shift bit count is the second shift bit count (which may be, for example, one bit). The shift bit count determining information may be the order for the exponential-Golomb coding mode. For example, in an attribute decoding process, the shift bit count determining information may be an order used when a reflectivity attribute is analyzed based on the exponential-Golomb coding mode, or may be an order used when a color attribute is analyzed based on the exponential-Golomb coding mode. The shift bit count threshold may be set by default by the encoder side and the decoder side, or may be obtained by analyzing the coding parameter set or the coded bitstream of the point cloud.

For the first coding mode and the second coding mode, shift reconstruction may be performed on the shift data to obtain initial reconstructed information of the target coding information, and the initial reconstructed information may be updated with a reference value associated with the m1$^{th}$ specific value, to obtain the reconstructed coding information of the target coding information. Update herein may specifically mean that the reconstructed coding information of the target coding information is equal to the initial reconstructed information of the target coding information plus the reference value. The reference value may specifically be the m1$^{th}$ specific value plus 1. For example, when the quantity of coding information flag fields is 1, the coding information flag field is configured for determining whether the target coding information is the specific value 0, and if the analytic value of the coding information flag field satisfies the shift analysis condition, that is, the target coding information is not the specific value 0, the initial reconstructed information of the target coding information obtained through analysis may be added with 1 (0+1) to obtain the reconstructed coding information of the target coding information.

The analysis process of the coded data relates to an exponential-Golomb coding mode-based analysis process. Therefore, the order for the exponential-Golomb coding mode is required to be confirmed. The order for the exponential-Golomb coding mode may be determined in any one of the following manners: The encoder side and the decoder side may set by default the order for the exponential-Golomb coding mode, the coded bitstream or the coding parameter set of the point cloud may be analyzed to obtain the order for the exponential-Golomb coding mode, or the order for the exponential-Golomb coding mode may be determined based on a data feature of the target coding information.

The manner of determining the order for the exponential-Golomb coding mode based on the data feature of the target coding information may specifically include any one of the following.

(1) The order for the exponential-Golomb coding mode is queried based on dynamic range information of the point cloud.

The data feature of the target coding information may include dynamic range information of a point cloud that the target coding information belongs to. The point cloud that the target coding information belongs to may be the entire point cloud, a point cloud slice, a current macroblock, a current prediction tree, or the like. The dynamic range information may be determined based on precision information of the point cloud. The precision information is a quantity of bits to which information in the point cloud may be accurate. A dynamic range parameter may be obtained by performing an exponent operation on the precision information. For example, the precision information of the information in the point cloud is 10 bits, and the dynamic range parameter may be 2^10.

After the dynamic range information of the point cloud that the target coding information belongs to is obtained, a query index value may be calculated based on the dynamic range information, and then the order for the exponential-Golomb coding mode may be queried in a query table based on the query index value. The query table may be written by experience. A length of the query table is correlated with the precision information of the point cloud. The query table includes a plurality of index values and orders corresponding to the index values. Therefore, an order corresponding to the query index value may be quickly found from the query table based on the query index value as the order for the exponential-Golomb coding mode.

A calculation process of the query index value may further be correlated with a quantization step of the point cloud. The dynamic range parameter may be calculated based on the dynamic range information and the quantization step, and then the query index value may be calculated based on the dynamic range parameter. For details, refer to the following formula:

$$\text{Index}=\log_2 B'-1$$

Index represents the query index value. B' represents the dynamic range parameter.

(2) The order for the exponential-Golomb coding mode is adaptively determined.

Adaptively determining the order for the exponential-Golomb coding mode may specifically mean determining an initial order, and adjusting the initial order or a current order based on the data feature of the target coding information to obtain the order for the exponential-Golomb coding mode. The data feature of the target coding information may include decoding information of a previous decoded point of a to-be-decoded point that the target coding information belongs to. The previous decoded point may be a decoded point sorted before the to-be-decoded point in decoding. The decoding information of the previous decoded point may be information that is obtained through analysis and that is correlated with the previous decoded point, for example, geometric residual information and attribute residual information of the previous decoded point.

First, the initial order golombNum may be obtained, and an order adjustment threshold is determined based on the initial order. The order adjustment threshold may include an order adjustment upper limit golombNumUp and an order adjustment lower limit golombNumLow. For a first determining manner for the order adjustment upper limit golombNumUp and the order adjustment lower limit golombNumLow, refer to the following formulas:

$$\text{golombNumLow}=2^{\wedge}\text{golombNum}, \quad \text{golombNumUp}=2^{\wedge}(\text{golombNum}+1)$$

For a second determining manner for the order adjustment upper limit golombNumUp and the order adjustment lower limit golombNumLow, refer to the following formulas:

$$\text{golombNumLow}=2^{\wedge}(\text{golombNum}-1), \quad \text{golombNumUp}=2^{\wedge}\text{golombNum}$$

Second, the initial order or the current order may be adjusted based on a magnitude relationship between the decoding information of the previous decoded point and the order adjustment threshold, to obtain the order for the exponential-Golomb coding mode. Specifically, a statistical feature value of the decoding information of the previous decoded point may be determined. The previous decoded point may be a previous decoded point adjacent to the to-be-decoded point, and a statistical feature value A' may be decoding information of the adjacent previous decoded point.

Alternatively, the order for the exponential-Golomb coding mode is adaptively adjusted at an interval of L points, and a statistical feature valueA' may be an average value of decoding information of L previous decoded points. Alternatively, the order for the exponential-Golomb coding mode is adaptively adjusted at an interval of L points, and a statistical feature value A' may be an average value of non-zero decoding information in decoding information of L previous decoded points. This is not limited in this embodiment of this application.

Then, the initial order or the current order may be adjusted based on a magnitude relationship between the statistical feature value and the order adjustment threshold to obtain the order for the exponential-Golomb coding mode. The current order may be an order determined last time for the exponential-Golomb coding mode. Adjusting the initial order based on the magnitude relationship between the statistical feature value and the order adjustment threshold to obtain the order for the exponential-Golomb coding mode may include: if the statistical feature value is greater than the order adjustment upper limit, the order for the exponential-Golomb coding mode is equal to the initial order minus an update value (which may be, for example, 1); or if the statistical feature value is less than the order adjustment lower limit, the order for the exponential-Golomb coding mode is equal to the initial order plus an update value (which may be, for example, 1). For details, refer to the following formulas:

when when

$$A' < golombNumLow, \ K = golombNum + 1$$

$$A' > golombNumUp, \ K = golombNum - 1$$

A' represents the statistical feature value. golombNumLow represents the order adjustment lower limit. golombNumUp represents the order adjustment upper limit. golombNum represents the initial order. K represents the order for the exponential-Golomb coding mode.

Adjusting the current order based on the magnitude relationship between the statistical feature value and the order adjustment threshold to obtain the order for the exponential-Golomb coding mode may include: if the statistical feature value is greater than the order adjustment upper limit, the order for the exponential-Golomb coding mode is equal to the initial order minus an update value (which may be, for example, 1); or if the statistical feature value is less than the order adjustment lower limit, the order for the exponential-Golomb coding mode is equal to the initial order plus an update value (which may be, for example, 1). For details, refer to the following formulas:

when when

$$A1 < golombNumLow, \ K = K' + 1$$

$$A1 > golombNumUp, \ K = K' - 1$$

A' represents the statistical feature value. golombNumLow represents the order adjustment lower limit. golombNumUp represents the order adjustment upper limit. K' represents the current order. K represents the order for the exponential-Golomb coding mode.

Third, after the order for the exponential-Golomb coding mode is determined, an order resetting threshold may be further obtained. If it is determined based on the order resetting threshold that the order for the exponential-Golomb coding mode satisfies an order resetting condition, the order for the exponential-Golomb coding mode is required to be reset; or if it is determined based on the order resetting threshold that the order for the exponential-Golomb coding mode does not satisfy an order resetting condition, the order for the exponential-Golomb coding mode may remain unchanged. The order resetting threshold may include a first order resetting threshold t1 or a second order resetting threshold t2. That the order for the exponential-Golomb coding mode satisfies the order resetting condition may mean: the order for the exponential-Golomb coding mode is less than (less than or equal to) the first order resetting threshold, and in this case, the order for the exponential-Golomb coding mode may be reset to a first reference order t3; or the order for the exponential-Golomb coding mode is greater than (greater than or equal to) the second order resetting threshold, and in this case, the order for the exponential-Golomb coding mode may be reset to a second reference order t4. Both the first reference order t3 and the second reference order t4 may be set to corresponding initial orders. For details, refer to the following formulas:

if

$$K <= t1 \ (K < t1), \ K = t3 \ (t1 \ and \ t3 \ may \ be \ the \ same \ or \ different);$$

and

if

$$K>=t2\ (K>t2),\ K=t4\ (t2\ and\ t4\ may\ be\ the\ same\ or\ different).$$

That the order for the exponential-Golomb coding mode does not satisfy the order resetting condition may mean: the order for the exponential-Golomb coding mode is greater than or equal to (greater than) the first order resetting threshold, and in this case, the order for the exponential-Golomb coding mode may remain unchanged; or the order for the exponential-Golomb coding mode is less than or equal to (greater than) the second order resetting threshold, and in this case, the order for the exponential-Golomb coding mode may remain unchanged.

In addition, if the analysis process of the coded data relates to a plurality of exponential-Golomb coding mode-based analysis processes, orders for respective exponential-Golomb coding modes are independent of or associated with each other. Association with each other may include any one of the following cases: The orders for the respective exponential-Golomb coding modes are the same; or the orders for the respective exponential-Golomb coding modes are associated through an offset parameter (offset). For example, the foregoing five orders K1, K2, K3, K4, and K5 for the exponential-Golomb coding mode may be associated through the offset parameter (offset): K2=K1-offset, K3=K1-offset, K4=K1-offset, and K5=K1-offset. For another example, K2=K1-offset, K3=K2-offset, K4=K3-offset, K5=K4-offset.

In this embodiment of this application, after the coded data of the point cloud is obtained, the coded data is analyzed to obtain the shift data. The shift data is obtained by performing shift processing on the target coding information of the point cloud in the encoding process of the point cloud. Shift reconstruction is performed on the shift data to obtain the reconstructed coding information of the target coding information. According to this embodiment of this application, shift processing is performed on the target coding information, so that a data volume required to be decoded in a decoding phase of the point cloud can be reduced, and efficiency of decoding the point cloud can be improved.

The following describes, with reference to a syntax table, an application of the point cloud processing solution provided in the embodiments of this application to an actual point cloud decoding process.

Syntax table 1

| geometry_predtree_node(nodeIdx) { |
|---|
| for( k = 0; k < 3; k++ ) { |
| ptn_residual_eq0_flag[k] |
| if( !ptn_residual_abs_eq0_flag[k] ) { |
| ptn_residual_abs_remaining[k] |
| ptn_residual_abs_half_eq0_flag[k] |
| if( !ptn_residual_abs_half_eq0_flag[k] ) { |
| ptn_residual_abs_numbits[k] |
| for(j=0; j< ptn_residual_abs_numbits[k];j++){ |
| ptn_residual_abs_value_per[k][j] |
| } |
| } |
| } |
| } |
| } |

Parameters involved in the syntax table 1 are first explained herein.

nodeIdx: It indicates a current point in the point cloud.

k: It indicates a $k^{th}$ direction of the current point.

ptn_residual_abs_eq0_flag (coding information flag field): It indicates whether the target coding information is 0. When this field is set to 1, it indicates that the target coding information is 0. When this field is set to 0, it indicates that the target coding information is not 0 (and greater than 0).

ptn_residual_abs_remainingptn: It indicates the coding shift remainder obtained by performing shift processing on the target coding information.

ptn_residual_abs_half_eq0_flag (shift quotient flag field): It indicates whether the coding shift quotient obtained by performing shift processing on the target coding information is 0. When this field is set to 1, it indicates that the coding shift quotient is 0. When this field is set to 0, it indicates that the coding shift quotient is not 0 (and greater than 0).

ptn_residual_abs_numbits (occupancy bit field): It indicates a bit occupied by a current to-be-coded value.

ptn_numbits_remaining (occupancy remainder field): It indicates an occupancy shift remainder obtained by performing shift processing on the occupancy bit.

ptn_residual_abs_value_per (bit value field): It indicates a value of each bit in the occupancy bit.

It may be learned that the syntax table 1 describes an analysis process (corresponding to the first coding mode) of the target coding information of the point cloud with an example in which the target coding information is a residual value of the current point in the point cloud in the $k^{th}$ direction. For details, refer to the following descriptions.

(1) Whether ptn_residual_abs_eq0_flag[k] is 0 is analyzed. If ptn_residual_abs_eq0_flag[k] is 0, analysis is continued; or if ptn_residual_abs_eq0_flag[k] is not 0, it may be determined that the residual value A[k] of the current point in the $k^{th}$ direction is 0.

(2) If ptn_residual_abs_eq0_flag[k] is 0, ptn_residual_abs_remaining[k] is analyzed to obtain a coding shift remainder A2[k] of the residual value of the current point in the $k^{th}$ direction.

(3) Whether ptn_residual_abs_half_eq0_flag[k] is 0 is analyzed. If ptn_residual_abs_half_eq0_flag[k] is 0, analysis is continued; or if ptn_residual_abs_half_eq0_flag[k] is not 0, it may be determined that a coding shift quotient A1[k] of the residual value of the current point in the $k^{th}$ direction is 0.

(4) If ptn_residual_abs_half_eq0_flag[k] is 0, the coding shift quotient A1[k] of the residual value of the current point in the $k^{th}$ direction may be analyzed based on the bit coding mode, that is, ptn_residual_abs_numbits[k] and ptn_residual_abs_value_per[k][j] are analyzed to obtain the coding shift quotient A1[k] of the residual value of the current point in the $k^{th}$ direction.

(5) The residual value A[k] of the current point in the $k^{th}$ direction is reconstructed through the coding shift quotient A1[k] and the coding shift remainder A2[k]: A[k]=A1[k]<<s1+A2[k].

Syntax table 2

| geometry_predtree_node(nodeIdx) { |
|---|
| for( k = 0; k < 3; k++ ) { |
| ptn_residual_abs_eq0_flag[k] |
| if( !ptn_residual _abs_eq0_flag[k] ) { |
| ptn_residual_abs_remaining[k] |
| ptn_residual_abs_numbits[k] |
| for(j=0; j<ptn_residual_abs_numb its[k],j++){ |
| ptn_residual_abs_value_per[k][j] |
| } |
| } |
| } |
| } |

It may be learned that the syntax table 2 describes an analysis process (corresponding to the second coding mode) of the target coding information of the point cloud with an example in which the target coding information is a residual value of the current point in the point cloud in the $k^{th}$ direction. For details, refer to the following descriptions.

(1) Whether ptn_residual_abs_eq0_flag[k] is 0 is analyzed. If ptn_residual_abs_eq0_flag[k] is 0, analysis is continued; or if ptn_residual_abs_eq0_flag[k] is not 0, it may be determined that the residual value A[k] of the current point in the $k^{th}$ direction is 0.

(2) If ptn_residual_abs_eq0_flag[k] is 0, ptn_residual_abs _remaining[k] is analyzed to obtain a coding shift remainder A2[k] of the residual value of the current point in the $k^{th}$ direction.

(3) A coding shift quotient A1[k] of the residual value of the current point in the $k^{th}$ direction is analyzed based on the bit coding mode, that is, ptn_residual_abs_numbits[k] and ptn_residual_abs_value_per[k] [j] are analyzed to obtain the coding shift quotient A1[k] of the residual value of the current point in the $k^{th}$ direction.

(4) The residual value A[k] of the current point in the $k^{th}$ direction is reconstructed through the coding shift quotient A1 [k] and the coding shift remainder A2[k]:A[k]=A1[k]<<s1+A2[k].

Syntax table 3

| geometry_predtree_node(nodeIdx) { |
| --- |
| for( k = 0; k < 3; k++ ) { |
| ptn_residual_abs_remaining[k] |
| ptn_residual_half_eq0_flag[k] |
| if( !ptn_residual_half_eq0_flag[k] ) { |
| ptn_residual_abs_numbits[k] |
| for(j=0; j<ptn_residual_abs_numb its [k],j++){ |
| ptn_residual_abs_value_per[k][j] |
| } |
| } |
| } |
| } |

It may be learned that the syntax table 3 describes an analysis process (corresponding to the third coding mode) of the target coding information of the point cloud with an example in which the target coding information is a residual value of the current point in the point cloud in the $k^{th}$ direction. For details, refer to the following descriptions.

(1) ptn_residual_abs_remaining[k] is analyzed to obtain a coding shift remainder A2[k] of the residual value of the current point in the $k^{th}$ direction.

(2) Whether ptn_residual_abs_half_eq0_flag[k] is 0 is analyzed. If ptn_residual_abs_half_eq0_flag[k] is 0, analysis is continued; or if ptn_residual_abs_half_eq0_flag[k] is not 0, it may be determined that a coding shift quotient A1[k] of the residual value of the current point in the $k^{th}$ direction is 0.

(3) If ptn_residual_abs_half_ eq0_flag[k] is 0, the coding shift quotient A1[k] of the residual value of the current point in the $k^{th}$ direction may be analyzed based on the bit coding mode, that is, ptn_residual_abs_numbits[k] and ptn_residual_abs_value_per[k][j] are analyzed to obtain the coding shift quotient A1[k] of the residual value of the current point in the $k^{th}$ direction.

(4) The residual value A[k] of the current point in the $k^{th}$ direction is reconstructed through the coding shift quotient A1 [k] and the coding shift remainder A2[k]: A[k]=A1[k]<<s1+A2[k].

Syntax table 4

| geometry_predtree_node(nodeIdx) { |
|---|
| for( k = 0; k < 3; k++ ) { |
| ptn_residual_abs_remaining[k] |
| ptn_residual_abs_numbits[k] |
| for(j=0; j< ptn_residual_abs_numb its[k],j++){ |
| ptn_residual_abs_value_per[k][j] |
| } |
| } |
| } |

It may be learned that the syntax table 4 describes an analysis process (corresponding to the third coding mode) of the target coding information of the point cloud with an example in which the target coding information is a residual value of the current point in the point cloud in the $k^{th}$ direction. For details, refer to the following descriptions.

(1) ptn_residual_abs_remaining[k] is analyzed to obtain a coding shift remainder A2[k] of the residual value of the current point in the $k^{th}$ direction.

(2) A coding shift quotient A1[k] of the residual value of the current point in the $k^{th}$ direction is analyzed based on the bit coding mode, that is, ptn_residual_abs_numbits[k] and ptn_residual_abs_value_per[k] [j] are analyzed to obtain the coding shift quotient A1[k] of the residual value of the current point in the $k^{th}$ direction.

(3) The residual value A[k] of the current point in the $k^{th}$ direction is reconstructed through the coding shift quotient A1 [k] and the coding shift remainder A2[k]: A[k]=A1[k]<<s1+A2[k].

Syntax table 5

| zero_run_length_code(useGolomb) { |
|---|
| zero_run_length_equal_zero |
| if (!zero_run_length_equal_zero) { |
| zero_run_length_equal_one |
| if (!zero_run_length_equal_one) { |
| zero_run_length_equal_two |
| if (!zero_run_length_equal_two) { |
| zero_run_length_minus3_parity |
| if(useGolomb) { |
| zero_run_length_minus3_parityH |
| zero_run_length_minus3_div4 |
| } else { |
| zero_run_length_minus3_div2 |
| } |
| } |
| } |
| } |

Parameters involved in the syntax table 5 are first explained herein.

zero_run_length_equal_zero(a flag that a zero-run-length value is 0, which may be used as a coding information flag field):

It is a binary variable. A value "1" indicates that the zero-run-length value is 0. A value "0" indicates that the zero-run-length value is not 0. When this syntactic element is not in the bitstream, a value of the syntactic element defaults to 0.

zero_run_length_equal_one(a flag that the zero-run-length value is 1, which may be used as a coding information flag field):

It is a binary variable. A value "1" indicates that the zero-run-length value is 1. A value "0" indicates that the zero-run-length value is not 1. When this syntactic element is not in the bitstream, a value of the syntactic element defaults to 0.

zero_run_length_equal_two(a flag that the zero-run-length value is 2, which may be used as a coding information flag field):

It is a binary variable. A value "1" indicates that the zero-run-length value is 2. A value "0" indicates that the zero-run-length value is not 2. When this syntactic element is not in the bitstream, a value of the syntactic element defaults to 0.

zero_run_length_minus3_parity (a flag indicating parity of the zero-run-length value minus 3):

It is a binary variable. A value "0" indicates that the zero-run-length value minus 3 is even. A value "1" indicates that the zero-run-length value minus 3 is odd.

zero_run_length_minus3_parityH (a flag indicating high-bit parity of the zero-run-length value minus 3):

It is a binary variable. A value "0" indicates that the zero-run-length value minus 3 divided by 2 is even. A value "1" indicates that the zero-run-length value minus 3 divided by 2 is odd.

zero_run_length_minus3_div2 (the zero-run-length value minus 3 divided by 2):

It is an unsigned integer. It represents the zero-run-length value minus 3 divided by 2 (that is, shifting to left by one bit). When this syntactic element is not in the bitstream, a value of the syntactic element defaults to 0.

zero_run_length_minus3_div4(the zero-run-length minus 3 divided by 4):

It is an unsigned integer. It represents the zero-run-length value minus 3 divided by 4 (that is, shifting to right by two bits). When this syntactic element is not in the bitstream, a value of the syntactic element defaults to 0.

It may be learned that the syntax table 5 describes an analysis process of the target coding information of the point cloud with an example in which the target coding information is the zero-run-length value. For details, refer to the following descriptions.

(1) zero_run_length_equal_zerois analyzed. If zero _run_length_equal_zero=0, zero_run_length_equal_onecontinues to be analyzed; or if zero _run_length_equal_zero=1, it indicates that the zero-run-length value is 0.

(2) zero_run_length_equal_oneis analyzed. If zero_run_length_equal_one=0, zero_run_length_equal_two continues to be analyzed; or if zero_run_length_equal _one=1, it indicates that the zero-run-length value is 1.

(3) zero_run_length_equal_twois analyzed. If zero_run_length_equal_two=0, zero_run_length_minus3_parity continues to be analyzed; or if zero_run_length_equal_two=1, it indicates that the zero-run-length value is 2.

(4) Whether useGolomb is true or false is determined.

(5) If useGolomb=true, it indicates that the zero-run-length value is shifted to right by two bits, zero_run_length_minus3_parity is analyzed as a low-bit value of the coding shift remainder of the zero-run-length value, zero _run_length_minus3_parityH is analyzed as a high-bit value of the coding shift remainder of the zero-run-length value, and zero _run_length_minus3_div4 is analyzed as a coding shift quotient of the zero-run-length value. The zero-run-length value zero_run_length_may be reconstructed through the coding shift quotient of the zero-run-length value, the high-bit value of the coding shift remainder, and the low-bit value of the coding shift remainder: zero_run_length=zero_run_length_minus3_div4≪2+zero_run_length_minus3_parityH+zero_run_1 ength _minus3_parity.

(6) If useGolomb=false, it indicates that the zero-run-length value is shifted to right by one bit, zero_run_length_minus3_parity is analyzed as a coding shift remainder of the zero-run-length value, and zero_run_length_minus3_div2 is analyzed as a coding shift quotient of the zero-run-length value. The zero-run-length value zero _run_length may be reconstructed through the coding shift quotient and the coding shift remainder of the zero-run-length value: zero_run_length=zero_run_length_minus3_div2≪1+zero_run_length_minus3_parity.

Syntax table 6

| zero_run_length_code(useGolomb) { |
| --- |
| zero_run_length_equal_zero |
| if (!zero_run_length_equal_zero) { |
| zero_run_length_equal_one |
| if (!zero_run_length_equal_one) { |
| zero_run_length_equal_two |
| if (!zero_run_length_equal_two) { |
| if(useGolomb){ |
| zero_run_length_minus3_mod4 |
| zero_run_length_minus3_div4 |
| } else { |
| zero_run_length_minus3_mod2 |
| zero_run_length_minus3_div2 |
| } |
| } |
| } |
| } |
| } |

Different parameters from those in the syntax table 5 in the syntax table 6 are first explained herein.

zero_run_length_minus3_mod4 (a flag of the zero-run-length value minus 3 mod 4):
It is an unsigned integer, and represents a value of the zero-run-length value minus 3 mod 4, that is, a coding shift remainder obtained by shifting the zero-run-length value minus 3 to right by two bits (a two-bit binary variable may alternatively be configured for representing a high bit and a low bit).
zero_run_length_minus3_mod2 (a flag of the zero-run-length value minus 3 mod 4):
It is an unsigned integer, and represents a value of the zero-run-length value minus 3 mod 2, that is, a coding shift remainder obtained by shifting the zero-run-length value minus 3 to right by one bit.

It may be learned that the syntax table 6 describes an analysis process of the target coding information of the point cloud with an example in which the target coding information is the zero-run-length value. For details, refer to the following descriptions.

(1) zero_run_length_equal_zerois analyzed. If zero _run_length_equal_zero=0, zero_run_length_equal_onecontinues to be analyzed; or if zero _run_length_equal_zero=1, it indicates that the zero-run-length value is 0.

(2) zero_run_length_equal_oneis analyzed. If zero_run_length_equal_one=0, zero_run_length_equal_two continues to be analyzed; or if zero_run_length_equal _one=1, it indicates that the zero-run-length value is 1.

(3) zero_run_length_equal_twois analyzed. If zero_run_length_equal_two=0, whether useGolomb is true or false is determined; or if zero _run_length_equal_two=1, it indicates that the zero-run-length value is 2.

(4) If useGolomb=true, it indicates that the zero-run-length value is shifted to right by two bits, zero _run_length_minus3_mod4 is analyzed as a coding shift remainder of the zero-run-length value, and zero _run_length_minus3_div4 is analyzed as a coding shift quotient of the zero-run-length value. The zero- run-length value zero_run_length_may be reconstructed through the coding shift quotient and the coding shift remainder of the zero-run-length value:
zero_run_length=zero_run_length_minus3_div4 ≪2+zero_run_length_minus3_mod4.

(5) If useGolomb=false, it indicates that the zero-run-length value is shifted to right by one bit, zero_run_length_minus3_mod2 is analyzed as a coding shift remainder of the zero-run-length value, and zero_run_length_minus3_div2 is analyzed as a coding shift quotient of the zero-run-length value. The zero-run-length value zero_run_length may be reconstructed through the coding shift quotient and the coding shift remainder of the zero-run-length value: zero_run_length=zero_run_length_minus3_div2 ≪1+zero_run_length_minus3_mod2.

In the syntax table 5 and the syntax table 6, whether useGolomb is true or false is required to be determined. Whether useGolomb is true or false is correlated with a shift bit count of the zero-run-length value. When useGolomb is true, the shift bit count of the zero-run-length value may be the first shift bit count (which may be, for example, two bits); or when useGolomb is false, the shift bit count of the zero-run-length value may be the second shift bit count (which may be, for example, one bit). For details of determining whether useGolomb is true or false in the attribute decoding process, refer to the following descriptions.

RefGolombNum represents the order used when the reflectivity attribute is coded based on the exponential-Golomb coding mode. RefGolombNum may be used as the shift bit count determining information. A bit count threshold $th_{val}$ may be used as the shift bit count threshold. If RefGolombNum≤the shift bit count threshold $th_{val}$, useGolomb=true, and the shift bit count of the zero-run-length value is the first shift bit count; or if RefGolombNum>the shift bit count threshold $th_{val}$, useGolomb=false, and the shift bit count of the zero-run-length value is the first shift bit count. The shift bit count threshold $th_{val}$ may be correlated with a specific attribute coding mode for attribute decoding. For example, when the attribute coding mode for attribute decoding is predicting transform coding, a value of the shift bit count threshold $th_{val}$ may be 1; or when the attribute coding mode for attribute decoding is transform coding, a value of the shift bit count threshold $th_{val}$ may be 2.

Similarly, ColorGolombNum represents the order used when the color attribute is coded based on the exponential-Golomb coding mode. ColorGolombNum may be used as the shift bit count determining information. A bit count threshold $th_{val}$ may be used as the shift bit count threshold. If ColorGolombNum≤the shift bit count threshold $th_{val}$, useGolomb=true, and the shift bit count of the zero-run-length value is the first shift bit count; or if ColorGolombNum>the shift bit count threshold $th_{val}$, useGolomb=false, and the shift bit count of the zero-run-length value is the first shift bit count. The shift bit count threshold $th_{val}$ may be correlated with a specific attribute coding mode for attribute decoding. For example, when the attribute coding mode for attribute decoding is predicting transform coding, a value of the shift bit count threshold $th_{val}$ may be 1; or when the attribute coding mode for attribute decoding is transform coding, a value of the shift bit count threshold $th_{val}$ may be 2.

Syntax table 7

| zero_run_length_code() { |
| --- |
| zero_run_length_equal_zero |
| if (!zero_run_length_equal_zero) { |
| zero_run_length_equal_one |
| if (!zero_run_length_equal_one) { |
| zero_run_length_equal_two |
| if (!zero_run_length_equal_two) { |
| zero_run_length_minus3_mod2 |
| zero_run_length_minus3_div2 |
| } |
| } |
| } |
| } |

It may be learned that the syntax table 7 describes an analysis process of the target coding information of the point cloud with an example in which the target coding information is the zero-run-length value. For details, refer to the following descriptions.

(1) zero_run_length_equal_zerois analyzed. If zero_run_length_equal_zero=0, zero_run_length_equal_onecontinues to be analyzed; or if zero_run_length_equal_zero=1, it indicates that the zero-run-length value is 0.

(2) zero_run_length_equal_oneis analyzed. If zero_run_length_equal_one=0, zero_run_length_equal_two continues to be analyzed; or if zero_run_length_equal _one=1, it indicates that the zero-run-length value is 1.

(3) zero_run_length_equal_twois analyzed. If zero_run_length_equal_two=1, it indicates that the zero-run-length value is 2.

(4) If zero _run_length_equal _two=0, zero _run_length_minus3_mod2 is analyzed as a coding shift remainder of the zero-run-length value, and zero _run_length_minus3_div2 is analyzed as a coding shift quotient of the zero-run-length value. The zero-run-length value zero_run_length_may be reconstructed through the coding shift quotient and the coding shift remainder of the zero-run-length value:

zero_run_length=zero_run_length_minus3_div2 ≪K1+zero_run_length_minus3_mod2.

An embodiment of this application provides a point cloud processing method. In the point cloud processing method, an encoding process of target coding information at an encoder side is mainly described. The point cloud processing method may be performed by a computer device. The computer device may be the encoding device 601 in the foregoing point cloud processing system. As shown in FIG. 8, the point cloud processing method may include the following operation S801 to operation S803:

S801: Obtain target coding information of a point cloud.

The target coding information may be any point cloud related information required to be encoded in an encoding process of the point cloud. For example, in a geometry coding process, if geometry predictive coding is used, the target coding information may be any residual information of any point in the point cloud (which may specifically be, for example, geometric residual information of any point in a specific direction); if geometry transform coding is used, the target coding information may be a transform coefficient of geometric information of any point in the point cloud (which may specifically be, for example, a transform coefficient of geometric information of any point in a specific direction); or if geometry predicting transform coding is used, the target coding information may be any a transform coefficient of geometric residual information of any point in the point cloud (which may specifically be, for example, a transform coefficient of geometric residual information of any point in a specific direction). For another example, in an attribute coding process, if attribute predictive coding is used, the target coding information may be attribute residual information of any point in the point cloud; if attribute transform coding is used, the target coding information may be a transform coefficient of attribute information of any point in the point cloud; or if attribute predicting transform coding is used, the target coding information may be a transform coefficient of attribute residual information of any point in the point cloud. If run-length coding is used in the attribute coding process or the geometry coding process, the target coding information may be run-length information. The run-length information may be, for example, a zero-run-length value. The zero-run-length value may be a quantity of continuous points whose residual information or transform coefficients are 0 in the point cloud.

S802: Perform shift processing on the target coding information to obtain shift data of the target coding information.

After the target coding information of the point cloud is obtained, shift processing may be performed on the target coding information to obtain the shift data of the target coding information. Shift processing may be performed on the target coding information based on a coding mode. Shift processing processes of the target coding information in different coding modes are different. In other words, the coding mode may be obtained, and shift processing is performed on the target coding information based on the coding mode to obtain the shift data of the target coding information.

For a determining process of the coding mode, refer to the following descriptions. The coding mode may be set by default by an encoder side and a decoder side. Alternatively, the coding mode may be determined based on coding mode information set by an encoder side, where the coding mode information is written into a coding parameter set or a coded bitstream of the point cloud by the encoder side. Alternatively, an encoder side and a decoder side set a threshold parameter by default, and the coding mode may be determined through mode determining information (which may be, for example, the target coding information, an occupancy bit of the target coding information, a QP of the target coding information, or bounding box information) and the threshold parameter. Alternatively, an encoder side and a decoder side set a threshold parameter, the coding mode may be determined through mode determining information and the threshold parameter, and the determined coding mode is written into a coding parameter set or a coded bitstream of the point cloud in a form of coding mode information. Alternatively, an encoder side may set a threshold parameter, the coding mode may be determined through mode determining information and the threshold parameter, and the set threshold parameter is written into a coding parameter set or a coded bitstream of the point cloud.

For an application scope of the coding mode in the point cloud, refer to the following descriptions. The coding mode may be applied to the entire point cloud, that is, a same coding mode is configured for each point in the point cloud. Alternatively, the coding mode may be applied to an entire point cloud slice, that is, a same coding mode is configured for each point in a same point cloud slice, where the point cloud slice may include one or more macroblocks. Alternatively, the coding mode may be applied to an entire macroblock, that is, a same coding mode is configured for each point in a same macroblock. Alternatively, the coding mode may be applied to an entire prediction tree, that is, a same coding mode is configured for each point in a same prediction tree. Alternatively, the coding mode may be applied to a single point in the point cloud. Alternatively, the coding mode may be applied to a specific direction (corresponding to the geometry coding process) of a single point, and in this case, a same coding mode may be configured for the single point in the point cloud in each direction, or different coding modes may be configured for the single point in the point cloud in each direction.

The following mainly describes shift processing processes of the target coding information in different coding modes.

(1) The coding mode may include a first coding mode. In the first coding mode, whether the target coding information is a specific value may be first determined. If the target coding information is not the specific value, shift processing may be performed on the target coding information to obtain the shift data of the target coding information. The shift data may include a coding shift quotient and a coding shift remainder of the target coding information. Then, whether the coding shift quotient of the target coding information is a specific value may be determined. If the coding shift quotient of the target coding information is not the specific value, it may be determined that indirect encoding processing is required to be performed on the coding shift quotient of the target coding information.

Specifically, whether the target coding information satisfies a shift coding condition may be determined, that is, whether the target coding information is the specific value is determined. If the target coding information satisfies the shift coding condition, it may indicate that the target coding information is not the specific value, and shift processing is required to be performed on the target coding information to obtain the coding shift quotient and the coding shift remainder of the target coding information. Then, whether the coding shift quotient satisfies an indirect coding condition may be determined, that is, whether the coding shift quotient is the specific value is determined. If the coding shift quotient satisfies the indirect coding condition, it may indicate that the coding shift quotient is not the specific value, and it may be determined that indirect encoding processing is required to be performed on the coding shift quotient.

(2) The coding mode may include a second coding mode. In the second coding mode, whether the target coding information is a specific value may be first determined. If the target coding information is not the specific value, shift processing may be performed on the target coding information to obtain the shift data of the target coding information. The shift data may include a coding shift quotient and a coding shift remainder of the target coding information.

Specifically, whether the target coding information satisfies a shift coding condition may be determined, that is, whether the target coding information is the specific value is determined. If the target coding information satisfies the shift coding condition, it may indicate that the target coding information is not the specific value, and shift processing is required to be performed on the target coding information to obtain the coding shift quotient and the coding shift remainder of the target coding information. In this case, indirect encoding processing is required to be performed on the coding shift quotient of the target coding information.

(3) The coding mode may include a third coding mode. In the third coding mode, shift processing may be performed on the target coding information to obtain the shift data of the target coding information. The shift data may include a coding shift quotient and a coding shift remainder of the target coding information. Then, whether the coding shift quotient of the target coding information is a specific value may be determined. If the coding shift quotient of the target coding information is not the specific value, it may be determined that indirect encoding processing is required to be performed on the coding shift quotient of the target coding information.

Specifically, shift processing is performed on the target coding information to obtain the coding shift quotient and the coding shift remainder of the target coding information. Then, whether the coding shift quotient satisfies an indirect coding condition may be determined, that is, whether the coding shift quotient is the specific value is determined. If the coding shift quotient satisfies the indirect coding condition, it may indicate that the coding shift quotient is not the specific value, and it may be determined that indirect encoding processing is required to be performed on the coding shift quotient.

(4) The coding mode may include a fourth coding mode. In the fourth coding mode, whether the target coding information is a specific value is not required to be determined, and whether a coding shift quotient of the target coding information is a specific value is also not required to be determined. In other words, shift processing may be directly performed on the target coding information to obtain the coding shift quotient of the target coding information and a coding shift remainder of the target coding information. In this case, indirect encoding processing is required to be performed on the coding shift quotient of the target coding information.

In both the first coding mode and the second coding mode, it is necessary to determine whether the target coding information satisfies the shift coding condition, that is, determine whether the target coding information is the specific value. If the target coding information satisfies the shift coding condition, it may be determined that the target coding information is not the specific value, and it is necessary to perform shift processing on the target coding information and perform encoding processing on the shift data obtained through shift processing; or if the target coding information does not satisfy the shift coding condition, it may be determined that the target coding information is the specific value, and encoding processing may be directly performed on the target coding information. For details of discrimination of the target coding information with respect to the shift coding condition, refer to the following content.

Matching check is required to be performed on the target coding information and m1 specific values during discrimination of the target coding information with respect to the shift coding condition. The m1 specific values correspond to different coding information flag fields respectively, and m1 is a positive integer. Matching check may be performed on the target coding information and an $i^{th}$ specific value in the m1 specific values, i being a positive integer less than m1. If the target coding information is not matched with (that is, not equal to) the $i^{th}$ specific value, it may indicate that the target coding information is not the $i^{th}$ specific value, and an ith coding information flag field corresponding to the $i^{th}$ specific value may be set to a first value (which may be, for example, 0) for coding, and matching check may be performed on the target coding information and an $(i+1)^{th}$ specific value in the m1 specific values; or if the target coding information is matched with (that is, equal to) the ith specific value, it may indicate that the target coding information is the ith specific value, and the target coding information may be directly coded, where directly coding the target coding information may mean setting an ith coding information flag field to a second value (which may be, for example, 1) for coding. When matching check is performed on an $m1^{th}$ specific value, if the target coding information is not matched with the $m1^{th}$ specific value, it may indicate that the target coding information is not the $m1^{th}$ specific value, an $m1^{th}$ coding information flag field corresponding to the $m1^{th}$ specific value may be set to the first value for coding, and it may be determined that the target coding information satisfies the shift coding condition; or if the target coding information is matched with the $m1^{th}$ specific value, it may be determined that the target coding information does not satisfy the shift coding condition, and the target coding information may be directly coded. Directly coding the target coding information may specifically mean setting an $m1^{th}$ coding information flag field to a second value for coding. The ith specific value may be i-1, that is, the $m1^{th}$ specific value may be m1-1.

For example, when matching check is performed on the target coding information and one specific value (the specific value may be 0), if the target coding information is matched with the specific value 0, the target coding information may be directly coded, that is, a coding information flag field may be set to 1 for coding; or if the target coding information is not matched with the specific value 0, the coding information flag field may be set to 0 for coding, and it may be determined that shift processing is required to be performed on the target coding information.

For another example, when matching check is performed on the target coding information and three specific values (which may be a first specific value 0, a second specific value 1, and a third specific value 2), if the target coding information is matched with the first specific value 0, the target coding information may be directly coded, that is, a first coding information flag field may be set to 1 for coding; or if the target coding information is not matched with the first specific value 0, a coding information flag field may be set to 0 for coding, and matching is performed on the target coding information and the second specific value 1. If the target coding information is matched with the second specific value 1, the target coding information may be directly coded, that is, a second coding information flag field may be set to 1 for coding; or if the target coding information is not matched with the second specific value 1, a second coding information flag field may be set to 0 for coding, and matching is performed on the target coding information and the third specific value 2. If the target coding information is matched with the third specific value 2, the target coding information may be directly coded, that is, a third coding information flag field may be set to 1 for coding; or if the target coding information is not matched with the third specific value 2, a third coding information flag field may be set to 0 for coding, and it may be determined that shift processing is required to be performed on the target coding information.

Furthermore, if the target coding information satisfies the shift coding condition, the target coding information may be updated with a reference value associated with the $m1^{th}$ specific value, and then shift processing may be performed on updated target coding information to obtain the coding shift quotient and the coding shift remainder of the target coding information. Update herein may specifically mean that the updated target coding information is equal to the target coding information before update minus the reference value. The reference value may specifically be the $m1^{th}$ specific value plus 1. For example, when matching check is performed on the target coding information and one specific value (the specific value may be 0), if the target coding information satisfies the shift coding condition, that is, the target coding information is not the specific value 0, 1 may be subtracted from the target coding information (the specific value 0+1), and shift processing is performed on target coding information obtained after 1 is subtracted. Herein, a purpose of subtracting the reference value from the target coding information (that is, the $m1^{th}$ specific value+1) is that when the target coding information is not matched with the $m1^{th}$ specific value, it indicates that the target coding information is a value greater than the $m1^{th}$ specific value, and subtracting the reference value (that is, the $m1^{th}$ specific value+1) can reduce a data volume for coding so that efficiency of coding the point cloud can be improved to some extent.

In both the first coding mode and the third coding mode, it is necessary to determine whether the coding shift quotient satisfies the indirect coding condition, that is, determine whether the coding shift quotient is the specific value. If the coding shift quotient satisfies the indirect coding condition, it may be determined that the coding shift quotient is not the specific value, and indirect encoding processing is required to be performed on the coding shift quotient; or if the coding shift quotient does not satisfy the indirect coding condition, it may be determined that the coding shift quotient is the specific value, and encoding processing may be directly performed on the coding shift quotient. For details of discrimination of the coding shift quotient with respect to the indirect coding condition, refer to the following content.

Matching check is required to be performed on the coding shift quotient and m2 specific values during discrimination of the coding shift quotient with respect to the indirect coding condition. The m2 specific values correspond to different shift quotient flag fields respectively, and m2 is a positive integer. Matching check may be performed on the coding shift quotient and a $j^{th}$ specific value in the m2 specific values, j being a positive integer less than m2. If the coding shift quotient is not matched with (that is, not equal to) the $j^{th}$ specific value, it may indicate that the coding shift quotient is not the j+ specific value, a $j^{th}$ shift quotient flag field corresponding to the $j^{th}$ specific value may be set to a first value (which may be, for example, 0) for coding, and matching check may be performed on the coding shift quotient and a $(j+1)^{th}$ specific value in the m2 specific values; or if the coding shift quotient is matched with (that is, equal to) the $j^{th}$ specific value, it may indicate that the coding shift quotient is the $j^{th}$ specific value, and the coding shift quotient may be directly coded, where directly coding the coding shift quotient may mean setting a $j^{th}$ shift quotient flag field to a second value (which may be, for example, 1) for coding. When matching check is performed on an $m2^{th}$ specific value, if the coding shift quotient is not matched with the $m2^{th}$ specific value, it may indicate that the coding shift quotient is not the $m2^{th}$ specific value, an $m2^{th}$ shift quotient flag field corresponding to the $m2^{th}$ specific value may be set to the first value for coding, and it may be determined that the coding shift quotient satisfies the indirect coding condition; or if the coding shift quotient is matched with the $m2^{th}$ specific value, it may be determined that the coding shift quotient does not satisfy the indirect coding condition, and the coding shift quotient may be directly coded, where directly coding the coding shift quotient may specifically mean setting an $m2^{th}$ shift quotient flag field to the second value for coding. The $j^{th}$ specific value may be j-1, that is, the $m2^{th}$ specific value may be m2-1.

For example, when matching check is performed on the coding shift quotient and one specific value (the specific value may be 0), if the coding shift quotient is matched with the specific value 0, the coding shift quotient may be directly coded, that is, a shift quotient flag field may be set to 1 for coding; or if the coding shift quotient is not matched with the specific value 0, a shift quotient flag field may be set to 0 for coding, and it may be determined that the coding shift quotient satisfies the indirect coding condition and indirect encoding process is required to be performed on the coding shift quotient.

For another example, when matching check is performed on the coding shift quotient and three specific values (which may be a first specific value 0, a second specific value 1, and a third specific value 2), if the coding shift quotient is matched with the first specific value 0, the coding shift quotient may be directly coded, that is, a first shift quotient flag field may be set to 1 for coding; or if the coding shift quotient is not matched with the first specific value 0, a shift quotient flag field may be set to 0 for coding, and matching is performed on the coding shift quotient and the second specific value 1. If the coding shift quotient is matched with the second specific value 1, the coding shift quotient may be directly coded, that is, a second shift quotient flag field may be set to 1 for coding; or if the coding shift quotient is not matched with the second specific value 1, a second shift quotient flag field may be set to 0 for coding, and matching is performed on the coding shift quotient and the third specific value 2. If the coding shift quotient is matched with the third specific value 2, the coding shift quotient may be directly coded, that is, a third shift quotient flag field may be set to 1 for coding; or if the coding shift quotient is not matched with the third specific value 2, a third shift quotient flag field may be set to 0 for coding, and it may be determined that the coding shift quotient satisfies the indirect coding condition and indirect encoding process is required to be performed on the coding shift quotient.

Furthermore, if the coding shift quotient satisfies the indirect coding condition, the coding shift quotient may be updated with a target value associated with the $m2^{th}$ specific value, and then it may be determined that indirect encoding processing is required to be performed on an updated coding shift quotient. Update herein may specifically mean that the updated coding shift quotient is equal to the coding shift quotient before update minus the target value. The target value may specifically be the $m2^{th}$ specific value plus 1. For example, when matching check is performed on the coding shift quotient and one specific value (the specific value may be 0), if the coding shift quotient satisfies the indirect coding condition, that is, the coding shift quotient is not the specific value 0, 1 may be subtracted from the coding shift quotient (the specific value 0+1), and it is determined that indirect encoding processing is performed on a coding shift quotient obtained after 1 is subtracted. Herein, a purpose of subtracting the target value from the coding shift quotient (that is, the $m2^{th}$ specific value+1) is that when the coding shift quotient is not matched with the $m2^{th}$ specific value, it indicates that the coding shift quotient is a value greater than the $m2^{th}$ specific value, and subtracting the target value (that is, the $m2^{th}$ specific value+1) can reduce a data volume for coding, so that efficiency of coding the point cloud can be improved to some extent.

In the first coding mode to the fourth coding mode, shift processing is performed on the target coding information (or the updated target coding information) based on a shift bit count (the shift bit count herein may be a second shift bit count). The shift bit count may be fixed. The shift bit count may be obtained through determining. Alternatively, the shift bit count may be variable.

First, if the shift bit count is fixed, the shift bit count may be obtained, and shift processing may be performed on the target coding information based on the shift bit count to obtain a coding shift quotient and a coding shift remainder of the target coding information. If the shift bit count is fixed, the shift bit count may be set by default by the encoder side and the decoder side, or the shift bit count may be set by the encoder side. The shift bit count is written into the coding parameter set or the coded bitstream of the point cloud.

Second, if the shift bit count is obtained through determining, shift bit count determining information and a shift bit count threshold may be obtained, and the shift bit count is determined based on a magnitude relationship between the shift bit count determining information and the shift bit count threshold. Specifically, when the shift bit count determining information is less than or equal to the shift bit count threshold, it may be determined that the shift bit count is a first shift bit count (which may be, for example, two bits); or when the shift bit count determining information is greater than the shift bit count threshold, it may be determined that the shift bit count is the second shift bit count (which may be, for example, one bit). Then, shift processing may be performed on the target coding information based on the shift bit count to obtain the coding shift quotient and the coding shift remainder of the target coding information. The shift bit count determining information may be an order for an exponential-Golomb coding mode. For example, in an attribute decoding process, the shift bit count determining information may be an order used when a reflectivity attribute is coded based on the exponential-Golomb coding mode, or may be an order used when a color attribute is coded based on the exponential-Golomb coding mode. If the shift bit count is obtained through determining, the shift bit count threshold may be set by default by the encoder side and the decoder side, or the shift bit count threshold may be set by the encoder side. The shift bit count threshold is written into the coding parameter set or the coded bitstream of the point cloud. The shift bit count obtained through determining may be written into the coding parameter set or the coded bitstream of the point cloud.

Third, if the shift bit count is variable, an initial shift bit count may be obtained, and shift processing is performed on the target coding information based on the initial shift bit count to obtain a reference shift quotient and a reference shift remainder of the target coding information. If the reference shift quotient is less than a shift quotient threshold, the reference shift quotient is determined as the coding shift quotient, and the reference shift remainder is determined as the coding shift remainder; or if the reference shift quotient is greater than or equal to a shift quotient threshold, the initial shift bit count is updated (specifically, the initial shift bit count may be increased), and shift processing is performed on the target coding information based on an updated shift bit count until a reference shift quotient less than the reference quotient threshold is obtained through shift processing. If the shift bit count is variable, a shift bit count that makes the reference shift quotient obtained through shift processing less than the shift quotient threshold may be written into the coding parameter set of the point cloud or the coded bitstream of the point cloud.

S803: Encode the shift data.

In the first coding mode to the fourth coding mode, after shift processing is performed on the target coding information (or the updated target coding information) to obtain the shift data, the shift data may be encoded. The shift data may include the coding shift quotient and the coding shift remainder of the target coding information. Encoding the shift data means encoding the coding shift quotient (performing indirect encoding processing on the coding shift quotient) and encoding the coding shift remainder.

Performing encoding processing on the coding shift quotient, that is, performing indirect encoding processing on the coding shift quotient, may include any one of the following two modes. In a first mode, the coding shift quotient may be encoded based on the exponential-Golomb coding mode. An order for the exponential-Golomb coding mode herein is a K1$^{th}$ order, K1 being a nonnegative integer. In a second mode, the coding shift quotient may be encoded based on a bit coding mode.

In the second mode for encoding the coding shift quotient (that is, the bit coding mode), an occupancy bit of the coding shift quotient may be calculated, the occupancy bit is encoded, and then a value of each bit occupied by the coding shift quotient may be encoded.

The occupancy bit may be encoded in any one of the following modes. First, the bit coding mode: The occupancy bit may specifically be encoded based on the bit coding mode, that is, a value of each bit occupied by the occupancy bit may be encoded bit by bit. Second, the exponential-Golomb coding mode: The occupancy bit may be encoded based on the exponential-Golomb coding mode, where an order for the exponential-Golomb coding mode is a K3$^{th}$ order, K3 being a nonnegative integer. Third, a shift coding mode: The occupancy bit may be encoded based on the shift coding mode. Specifically, shift processing may be performed on the occupancy bit to obtain an occupancy shift quotient and an occupancy shift remainder of the occupancy bit, then the occupancy shift quotient may be encoded, and the occupancy shift remainder may be encoded. For the shift coding mode:

The occupancy shift quotient and the occupancy shift remainder may be encoded in the bit coding mode or the exponential-Golomb coding mode. Specifically, for the occupancy shift quotient, the occupancy shift quotient may be encoded based on the bit coding mode, that is, a value of each bit occupied by the occupancy shift quotient may be encoded bit by bit; or the occupancy shift quotient may be encoded based on the exponential-Golomb coding mode, where the order for the exponential-Golomb coding mode herein is a K4$^{th}$ order, K4 being a nonnegative integer. For the occupancy shift remainder, the occupancy shift remainder may be encoded based on the bit coding mode, that is, a value of each bit occupied by the occupancy shift remainder may be encoded bit by bit; or the occupancy shift remainder may be encoded based on the exponential-Golomb coding mode, where the order for the exponential-Golomb coding mode herein is a K5$^{th}$ order, K5 being a nonnegative integer.

A process of performing shift processing on the occupancy bit to obtain the occupancy shift quotient and the occupancy shift remainder of the occupancy bit may be performed based on the shift bit count (the shift bit count herein may be the second shift bit count), that is, shift processing may be performed on the occupancy bit based on the shift bit count to obtain the occupancy shift quotient and the occupancy shift remainder of the occupancy bit. A determining process of the second shift bit count herein is similar to that of the first shift bit count, and details are not described herein again.

Performing encoding processing on the coding shift remainder may include any one of the following two modes. In a first mode, the coding shift remainder may be encoded based on the exponential-Golomb coding mode. The order for the exponential-Golomb coding mode herein is a K2$^{th}$ order, K2 being a nonnegative integer. In a second mode, the coding shift remainder may be encoded based on the bit coding mode, that is, a value of each bit occupied by the coding shift remainder may be encoded bit by bit.

If a coding process of the target coding information relates to an exponential-Golomb coding mode-based coding process, the order for the exponential-Golomb coding mode is required to be confirmed. The order for the exponential-Golomb coding mode may be determined in any one of the following manners: the encoder side and the decoder side may set by default the order for the exponential-Golomb coding mode, or the order for the exponential-Golomb coding mode may be determined based on a data feature of the target coding information. The order for the exponential-Golomb coding mode is written into the coded bitstream or the coding parameter set of the point cloud.

The manner of determining the order for the exponential-Golomb coding mode based on the data feature of the target coding information may specifically include any one of the following.

(1) The order for the exponential-Golomb coding mode is queried based on dynamic range information of the point cloud.

The data feature of the target coding information may include dynamic range information of a point cloud that the target coding information belongs to. The point cloud that the target coding information belongs to may be the entire point cloud, a point cloud slice, a current macroblock, a current prediction tree, or the like. The dynamic range information may be determined based on precision information of the point cloud. The precision information is a quantity of bits to which information in the point cloud may be accurate. A dynamic range parameter may be obtained by performing an exponent operation on the precision information. For example, the precision information of the information in the point cloud is 10 bits, and the dynamic range parameter may be 2^10. Alternatively, the dynamic range information may be a difference between maximum coding information and minimum coding information in the point cloud. For example, the dynamic range information may be a difference between a maximum residual value and a minimum residual value in the point cloud.

After the dynamic range information of the point cloud that the target coding information belongs to is obtained, a query index value may be calculated based on the dynamic range information, and then the order for the exponential-Golomb coding mode may be queried in a query table based on the query index value. The query table may be written by experience. A length of the query table is correlated with the precision information of the point cloud. The query table includes a plurality of index values and orders corresponding to the index values. Therefore, an order corresponding to the query index value may be quickly found from the query table based on the query index value as the order for the exponential-Golomb coding mode.

A calculation process of the query index value may further be correlated with a quantization step of the point cloud. The dynamic range parameter may be calculated based on the dynamic range information and the quantization step, and then the query index value may be calculated based on the dynamic range parameter. For details, refer to the following formula:

$$\mathrm{Index} = \log_2 B' - 1$$

Index represents the query index value. B' represents the dynamic range parameter.

(2) The order for the exponential-Golomb coding mode is adaptively determined.

Adaptively determining the order for the exponential-Golomb coding mode may specifically mean determining an initial order, and adjusting the initial order or a current order based on the data feature of the target coding information to obtain the order for the exponential-Golomb coding mode. The data feature of the target coding information may include coding information of a previous coded point of a to-be-coded point that the target coding information belongs to. The previous coded point may be a coded point sorted before the to-be-coded point in coding. The coding information of the previous coded point may be information that is obtained through analysis and that is correlated with the previous coded point, for example, geometric residual information and attribute residual information of the previous coded point.

First, the initial order golombNum may be obtained, and an order adjustment threshold is determined based on the initial order. The order adjustment threshold may include an order adjustment upper limit golombNumUp and an order adjustment lower limit golombNumLow. For a first determining manner for the order adjustment upper limit golombNumUp and the order adjustment lower limit golombNumLow, refer to the following formulas:

$$golombNumLow = 2^{\wedge}golombNum, \quad golombNumUp = 2^{\wedge}(golombNum+1)$$

For a second determining manner for the order adjustment upper limit golombNumUp and the order adjustment lower limit golombNumLow, refer to the following formulas:

$$golombNumLow = 2^{\wedge}(golombNum-1), \quad golombNumUp = 2^{\wedge}golombNum$$

Second, the initial order or the current order may be adjusted based on a magnitude relationship between the coding information of the previous coded point and the order adjustment threshold, to obtain the order for the exponential-Golomb coding mode. Specifically, a statistical feature value of the coding information of the previous coded point may be determined. The previous coded point may be a previous coded point adjacent to the to-be-coded point, and a statistical feature value A' may be coding information of the adjacent previous coded point. Alternatively, the order for the exponential-Golomb coding mode is adaptively adjusted at an interval of L points, and a statistical feature value A' may be an average value of coding information of L previous coded points. Alternatively, the order for the exponential-Golomb coding mode is adaptively adjusted at an interval of L points, and a statistical feature value A' may be an average value of non-zero coding information in coding information of L previous coded points. This is not limited in this embodiment of this application.

Then, the initial order or the current order may be adjusted based on a magnitude relationship between the statistical feature value and the order adjustment threshold to obtain the order for the exponential-Golomb coding mode. The current order may be an order determined last time for the exponential-Golomb coding mode. Adjusting the initial order based on the magnitude relationship between the statistical feature value and the order adjustment threshold to obtain the order for the exponential-Golomb coding mode may include: if the statistical feature value is greater than the order adjustment upper limit, the order for the exponential-Golomb coding mode is equal to the initial order minus an update value (which may be, for example, 1); or if the statistical feature value is less than the order adjustment lower limit, the order for the exponential-Golomb coding mode is equal to the initial order plus an update value (which may be, for example, 1). For details, refer to the following formulas:

when

$$A' < golombNumLow, \quad K = golombNum+1$$

when

$$A' > golombNumUp, \quad K = golombNum-1$$

A' represents the statistical feature value. golombNumLow represents the order adjustment lower limit. golombNumUp represents the order adjustment upper limit. golombNum represents the initial order. K represents the order for the exponential-Golomb coding mode.

Adjusting the current order based on the magnitude relationship between the statistical feature value and the order adjustment threshold to obtain the order for the exponential-Golomb coding mode may include: if the statistical feature value is greater than the order adjustment upper limit, the order for the exponential-Golomb coding mode is equal to the initial order minus an update value (which may be, for example, 1); or if the statistical feature value is less than the order adjustment lower limit, the order for the exponential-Golomb coding mode is equal to the initial order plus an update value (which may be, for example, 1). For details, refer to the following formulas:

when when

$$A1 < golombNumLow, \quad K = K'+1$$

$$A1 > golombNumUp, \quad K = K'-1$$

A' represents the statistical feature value. golombNumLow represents the order adjustment lower limit. golombNumUp represents the order adjustment upper limit. golombNum represents the current order. K represents the order for the exponential-Golomb coding mode.

Third, after the order for the exponential-Golomb coding mode is determined, an order resetting threshold may be further obtained. If it is determined based on the order resetting threshold that the order for the exponential-Golomb coding mode satisfies an order resetting condition, the order for the exponential-Golomb coding mode is required to be reset; or if it is determined based on the order resetting threshold that the order for the exponential-Golomb coding mode does not satisfy an order resetting condition, the order for the exponential-Golomb coding mode may remain unchanged. The order resetting threshold may include a first order resetting threshold t1 or a second order resetting threshold t2. That the order for the exponential-Golomb coding mode satisfies the order resetting condition may mean: the order for the exponential-Golomb coding mode is less than (less than or equal to) the first order resetting threshold, and in this case, the order for the exponential-Golomb coding mode may be reset to a first reference order t3; or the order for the exponential-Golomb coding mode is greater than (greater than or equal to) the second order resetting threshold, and in this case, the order for the exponential-Golomb coding mode may be reset to a second reference order t4. Both the first reference order t3 and the second reference order t4 may be set to corresponding initial orders. For details, refer to the following formulas:

if

$$K <= t1 \ (K < t1), \ K = t3 \ (t1 \ \text{and} \ t3 \ \text{may be the same or different});$$

and
if

$$K >= t2 \ (K > t2), \ K = t4 \ (t2 \ \text{and} \ t4 \ \text{may be the same or different}).$$

That the order for the exponential-Golomb coding mode does not satisfy the order resetting condition may mean: the order for the exponential-Golomb coding mode is greater than or equal to (less than) the first order resetting threshold, and in this case, the order for the exponential-Golomb coding mode may remain unchanged; or the order for the exponential-Golomb coding mode is less than or equal to (greater than) the second order resetting threshold, and in this case, the order for the exponential-Golomb coding mode may remain unchanged.

In addition, if the coding process of the target coding information relates to a plurality of exponential-Golomb coding mode-based coding processes, orders for respective exponential-Golomb coding modes are independent of or associated with each other. Association with each other may include any one of the following cases: The orders for the respective exponential-Golomb coding modes are the same; or the orders for the respective exponential-Golomb coding modes are associated through an offset parameter (offset). For example, the foregoing five orders K1, K2, K3, K4, and K5 for the exponential-Golomb coding mode may be associated through the offset parameter (offset): K2=K1-offset, K3=K1-offset, K4=K1-offset, and K5=K1-offset. For another example, K2=K1-offset, K3=K2-offset, K4=K3-offset, K5=K4-offset.

In this embodiment of this application, after the target coding information of the point cloud is obtained, shift processing may be performed on the target coding information to obtain the shift data of the target coding information, and then the shift data may be encoded. According to this embodiment of this application, shift processing is performed on the target coding information, so that a data volume required to be encoded in an encoding phase of the point cloud can be reduced, and efficiency of encoding the point cloud can be improved.

The foregoing describes the method in the embodiments of this application in detail. For ease of implementing the foregoing solution of the embodiments of this application better, correspondingly, the following provides an apparatus in the embodiments of this application.

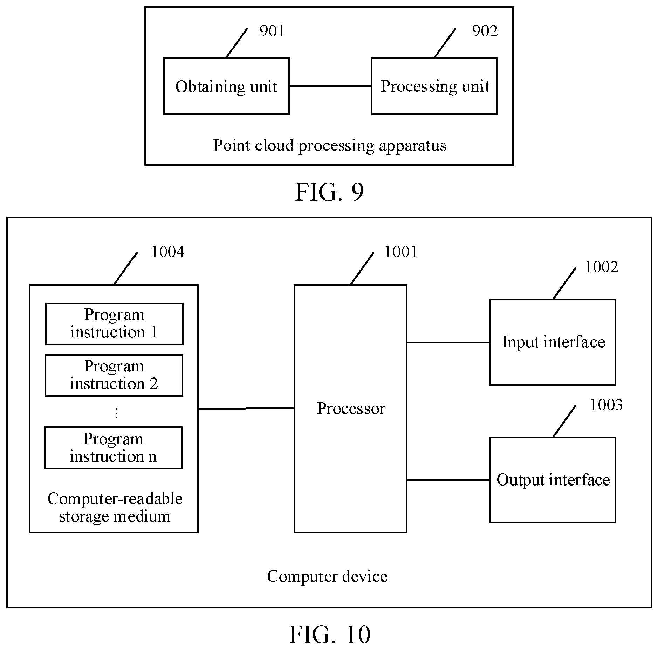

Refer to FIG. 9. FIG. 9 is a schematic diagram of a structure of a point cloud processing apparatus according to an embodiment of this application. The point cloud processing apparatus may be arranged in a computer device provided in the embodiments of this application. The computer device may be a decoding device mentioned in the method embodiment. The point cloud processing apparatus shown in FIG. 9 may be a computer program (including program code) running in the computer device. The point cloud processing apparatus may be configured to implement some or all of the operations in the method embodiment shown in FIG. 7. Refer to FIG. 9. The point cloud processing apparatus may include the following units:

an obtaining unit 901, configured to obtain coded data of a point cloud; and

a processing unit 902, configured to analyze the coded data to obtain shift data, the shift data being obtained by performing shift processing on target coding information of the point cloud in an encoding process of the point cloud.

The processing unit 902 is further configured to perform shift reconstruction on the shift data to obtain reconstructed coding information of the target coding information.

In an implementation, when configured to analyze the coded data to obtain the shift data, the processing unit 902 is specifically configured to perform the following operations:

obtaining a coding mode; and

analyzing the coded data based on the coding mode to obtain the shift data.

In an implementation, the coding mode includes a first coding mode. The shift data includes a coding shift quotient and a coding shift remainder of the target coding information. The coded data includes a coding information flag field. When configured to analyze the coded data based on the coding mode to obtain the shift data, the processing unit 902 is specifically configured to perform the following operations:

analyzing the coding information flag field, and determining whether an analytic value of the coding information flag field satisfies a shift analysis condition;

analyzing, if the analytic value of the coding information flag field satisfies the shift analysis condition, in which case the coded data further includes a shift quotient flag field, the shift quotient flag field, and determining whether an analytic value of the shift quotient flag field satisfies an indirect analysis condition; and

analyzing, if the analytic value of the shift quotient flag field satisfies the indirect analysis condition, in which case the coded data further includes a coding result of the coding shift quotient and a coding result of the coding shift remainder, the coding result of the coding shift quotient to obtain the coding shift quotient, and analyzing the coding result of the coding shift remainder to obtain the coding shift remainder.

In an implementation, the coding mode is a second coding mode. The shift data includes a coding shift quotient and a coding shift remainder of the target coding information. The coded data includes a coding information flag field. When configured to analyze the coded data based on the coding mode to obtain the shift data, the processing unit 902 is specifically configured to perform the following operations:

analyzing the coding information flag field, and determining whether an analytic value of the coding information flag field satisfies a shift analysis condition; and

analyzing, if the analytic value of the coding information flag field satisfies the shift analysis condition, in which case the coded data further includes a coding result of the coding shift quotient and a coding result of the coding shift remainder, the coding result of the coding shift quotient to obtain the coding shift quotient, and analyzing the coding result of the coding shift remainder to obtain the coding shift remainder.

In an implementation, the coding mode is a third coding mode. The shift data includes a coding shift quotient and a coding shift remainder. The coded data includes a shift quotient flag field. When configured to analyze the coded data based on the coding mode to obtain the shift data, the processing unit 902 is specifically configured to perform the following operations:

analyzing the shift quotient flag field, and determining whether an analytic value of the shift quotient flag field satisfies an indirect analysis condition; and

analyzing, if the analytic value of the shift quotient flag field satisfies the indirect analysis condition, in which case the coded data further includes a coding result of the coding shift quotient and a coding result of the coding shift remainder, the coding result of the coding shift quotient to obtain the coding shift quotient, and analyzing the coding result of the coding shift remainder to obtain the coding shift remainder.

In an implementation, the coding mode is a fourth coding mode. The shift data includes a coding shift quotient and a coding shift remainder. The coded data includes a coding result of the coding shift quotient and a coding result of the coding shift remainder. When configured to analyze the coded data based on the coding mode to obtain the shift data, the processing unit 902 is specifically configured to perform the following operations:

analyzing the coding result of the coding shift quotient to obtain the coding shift quotient; and

analyzing the coding result of the coding shift remainder to obtain the coding shift remainder.

In an implementation, a quantity of coding information flag fields is m1, each coding information flag field corresponds to a different specific value, and m1 is a positive integer. When configured to analyze the coding information flag field and determine whether the analytic value of the coding information flag field satisfies the shift analysis condition, the processing unit 902 is specifically configured to perform the following operations:

analyzing an ith coding information flag field in the m1 coding information flag fields, i being a positive integer less than m1;

analyzing an $(i+1)^{th}$ coding information flag field if an analytic value of the ith coding information flag field is a first value, or determining, if an analytic value of the ith coding information flag field is a second value, that the coding information flag field does not satisfy the shift analysis condition, and determining the reconstructed coding information of the target coding information to be an ith specific value, the ith specific value corresponding to the ith coding information flag field; and

when an $m1^{th}$ coding information flag field is analyzed, determining, if an analytic value of the $m1^{th}$ coding information flag field is the first value, that the analytic value of the coding information flag field satisfies the shift analysis condition, or determining, if an analytic value of the $m1^{th}$ coding information flag field is the second value, that the coding information flag field does not satisfy the shift analysis condition, and determining the reconstructed coding information of the target coding information to be an $m1^{th}$ specific value, the $m1^{th}$ specific value corresponding to the $m1^{th}$ coding information flag field.

In an implementation, when configured to perform shift reconstruction on the shift data to obtain the reconstructed coding information of the target coding information, the processing unit 902 is specifically configured to perform the following operations:

performing shift reconstruction on the shift data to obtain initial reconstructed information of the target coding information; and

updating the initial reconstructed information with a reference value associated with the $m1^{th}$ specific value, to obtain the reconstructed coding information of the target coding information.

In an implementation, a quantity of shift quotient flag fields is m2, each shift quotient flag field corresponds to a different specific value, and m2 is a positive integer. When configured to analyze the shift quotient flag field and perform discrimination on the analytic value of the shift quotient flag field with respect to the indirect analysis condition, the processing unit 902 is specifically configured to perform the following operations:

analyzing a $j^{th}$ shift quotient flag field in the m2 shift quotient flag fields, j being a positive integer less than m2;

analyzing a $(j+1)^{th}$ shift quotient flag field if an analytic value of the $j^{th}$ shift quotient flag field is a first value, or determining, if an analytic value of the $j^{th}$ shift quotient flag field is a second value, that the shift quotient flag field does not satisfy the indirect analysis condition, and determining the coding shift quotient to be a $j^{th}$ specific value, the $j^{th}$ specific value corresponding to the $j^{th}$ shift quotient flag field; and

when an $m2^{th}$ shift quotient flag field is analyzed, determining, if an analytic value of the $m2^{th}$ shift quotient flag field is the first value, that the analytic value of the shift quotient flag field satisfies the indirect analysis condition, or determining, if an analytic value of the $m2^{th}$ shift quotient flag field is a second value, that the shift quotient flag field does not satisfy the indirect analysis condition, and determining the coding shift quotient to be an $m2^{th}$ specific value, the $m2^{th}$ specific value corresponding to the $m2^{th}$ shift quotient flag field.

After configured to analyze the coding result of the coding shift quotient to obtain the coding shift quotient, the processing unit 902 is further configured to perform the following operation:
updating the coding shift quotient with a target value related to the $m2^{th}$ specific value.

In an implementation, when configured to analyze the coding result of the coding shift quotient to obtain the coding shift quotient, the processing unit 902 is specifically configured to perform the following operations:
analyzing the coding result of the coding shift quotient based on an exponential-Golomb coding mode to obtain the coding shift quotient, an order for the exponential-Golomb coding mode being a $K1^{th}$ order, and K1 being a nonnegative integer; or

analyzing the coding result of the coding shift quotient based on a bit coding mode to obtain the coding shift quotient.

In an implementation, when configured to analyze the coding result of the coding shift remainder to obtain the coding shift remainder, the processing unit 902 is specifically configured to perform the following operations: analyzing the coding result of the coding shift remainder based on the bit coding mode to obtain the coding shift remainder; or analyzing the coding result of the coding shift remainder based on the exponential-Golomb coding mode to obtain the coding shift remainder, the order for the exponential-Golomb coding mode being a $K2^{th}$ order, and K2 being a positive integer.

In an implementation, the coding result of the coding shift quotient includes a coding result of an occupancy bit of the coding shift quotient and a code of each bit occupied by the coding shift quotient. When configured to analyze the coding result of the coding shift remainder based on the bit coding mode to obtain the coding shift remainder, the processing unit 902 is specifically configured to perform the following operations:

analyzing the coding result of the occupancy bit of the coding shift quotient to obtain the occupancy bit of the coding shift quotient;

analyzing the code of each bit occupied by the coding shift quotient to obtain a value of each bit occupied by the coding shift quotient; and

reconstructing the coding shift quotient based on the value of each bit occupied by the coding shift quotient.

In an implementation, when configured to analyze the coding result of the occupancy bit of the coding shift quotient to obtain the occupancy bit of the coding shift quotient, the processing unit 902 is specifically configured to perform the following operations:

analyzing the coding result of the occupancy bit based on the bit coding mode to obtain the coding shift quotient; analyzing the coding result of the occupancy bit based on the exponential-Golomb coding mode to obtain the occupancy bit of the coding shift quotient, the order for the exponential-Golomb coding mode being a $K3^{th}$ order, and K3 being a nonnegative integer; or analyzing the coding result of the occupancy bit based on a shift coding mode to obtain the occupancy bit of the coding shift quotient.

In an implementation, the coding result of the occupancy bit includes a coding result of an occupancy shift quotient of the occupancy bit and a coding result of an occupancy shift remainder, and the occupancy shift quotient and the occupancy shift remainder are obtained by performing shift processing on the occupancy bit. When configured to analyze the coding result of the occupancy bit based on the shift coding mode to obtain the occupancy bit of the coding shift quotient, the processing unit 902 is specifically configured to perform the following operations:

analyzing the coding result of the occupancy shift quotient to obtain the occupancy shift quotient;

analyzing the coding result of the occupancy shift remainder to obtain the occupancy shift remainder; and

performing shift reconstruction processing on the occupancy shift quotient and the occupancy shift remainder to obtain the occupancy bit of the coding shift quotient.

In an implementation, when configured to analyze the coding result of the occupancy shift quotient to obtain the occupancy shift quotient, the processing unit 902 is specifically configured to perform the following operations: analyzing the coding result of the occupancy shift quotient based on the bit coding mode to obtain the occupancy shift quotient; or analyzing the coding result of the occupancy shift quotient based on the exponential-Golomb coding mode to obtain the occupancy shift quotient, the order for the exponential-Golomb coding mode being a $K4^{th}$ order, and K4 being a nonnegative integer.

When configured to analyze the coding result of the occupancy shift remainder to obtain the occupancy shift remainder, the processing unit 902 is specifically configured to perform the following operations: analyzing the coding result of the occupancy shift remainder based on the bit coding mode to obtain the occupancy shift remainder; or analyzing the coding result of the occupancy shift remainder based on the exponential-Golomb coding mode to obtain the occupancy shift remainder, the order for the exponential-Golomb coding mode being a $K5^{th}$ order, and K5 being a nonnegative integer.

In an implementation, the shift data includes a coding shift quotient and a coding shift remainder. When configured to perform shift reconstruction processing on the shift data to obtain the reconstructed coding information of the target coding information, the processing unit 902 is specifically configured to perform the following operations:

determining a shift bit count;

performing shift processing on the coding shift quotient based on the shift bit count to obtain a shifted coding shift quotient; and

adding the shifted coding shift quotient and the coding shift remainder to obtain the reconstructed coding information of the target coding information.

In an implementation, when configured to determine the shift bit count, the processing unit 902 is specifically configured to perform the following operations:

obtaining shift bit count determining information and a shift bit count threshold; and

determining the shift bit count based on a magnitude relationship between the shift bit count determining information and the shift bit count threshold.

In an implementation, the processing unit 902 is further configured to perform the following operation: determining an order for an exponential-Golomb coding mode if an analysis process of the coded data relates to an exponential-Golomb coding mode-based analysis process.

In an implementation, when configured to determine the order for the exponential-Golomb coding mode, the processing unit 902 is specifically configured to perform any one of the following operations:

setting, by default by an encoder side and a decoder side, the order for the exponential-Golomb coding mode;

analyzing a coding parameter set or a coded bitstream of the point cloud to obtain the order for the exponential-Golomb coding mode; and

determining the order for the exponential-Golomb coding mode based on a data feature of the target coding information.

In an implementation, when configured to determine the order for the exponential-Golomb coding mode based on the data feature of the target coding information, the processing unit 902 is specifically configured to perform the following operations:

determining an initial order; and

adjusting the initial order or a current order based on the data feature of the target coding information to determine the order for the exponential-Golomb coding mode.

In an implementation, if the analysis process of the coded data relates to a plurality of exponential-Golomb coding mode-based analysis processes, orders for respective exponential-Golomb coding modes are associated with or independent of each other. That the orders for the respective exponential-Golomb coding modes are associated with each other includes:
the orders for the respective exponential-Golomb coding modes are the same; or the orders for the respective exponential-Golomb coding modes are associated through an offset parameter.

According to another embodiment of this application, each unit in the point cloud processing apparatuses shown in FIG. 9 may exist respectively or be combined into one or more other units. Alternatively, a specific (or some) unit in the units may be further split into a plurality of smaller function units, thereby implementing the same operations without affecting the technical effects of the embodiments of this application. The units are divided based on logical functions. In actual applications, a function of one unit may be implemented by a plurality of units, or functions of a plurality of units may be implemented by one unit. In another embodiment of this application, the point cloud processing apparatus may include other units. In actual applications, these functions may be implemented collaboratively by the other units, and may be implemented collaboratively by a plurality of units.

According to another embodiment of this application, a computer program (including program code) capable of performing each operation involved in a part or all of the method shown in FIG. 7 may be run in a general-purpose computing device, for example, a computer, including a processing element and a storage element, for example, a central processing unit (CPU) 902, a random access memory (RAM), or a read-only memory (ROM), to structure the point cloud processing apparatus shown in FIG. 9 and implement the point cloud processing method in the embodiments of this application. The computer program may be recorded in, for example, a computer-readable storage medium and loaded, through the computer-readable storage medium, and run in the computing device.

In this embodiment of this application, after the coded data of the point cloud is obtained, the coded data is analyzed to obtain the shift data. The shift data is obtained by performing shift processing on the target coding information of the point cloud in the encoding process of the point cloud. Shift reconstruction is performed on the shift data to obtain the reconstructed coding information of the target coding information. According to this embodiment of this application, shift processing is performed on the target coding information, so that a data volume required to be decoded in a decoding phase of the point cloud can be reduced, and efficiency of decoding the point cloud can be improved.

Refer to FIG. 9. FIG. 9 is a schematic diagram of a structure of a point cloud processing apparatus according to an embodiment of this application. The point cloud processing apparatus may be arranged in a computer device provided in the embodiments of this application. The computer device may be a decoding device mentioned in the method embodiment. The point cloud processing apparatus shown in FIG. 9 may be a computer program (including program code) running in the computer device. The point cloud processing apparatus may be configured to implement some or all of the operations in the method embodiment shown in FIG. 8. Refer to FIG. 9. The point cloud processing apparatus may include the following units:

an obtaining unit 901, configured to obtain target coding information of a point cloud,

the obtaining unit 901 being further configured to obtain a coding mode; and

a processing unit 902, configured to perform shift processing on the target coding information based on the coding mode to obtain shift data of the target coding information.

The processing unit 902 is further configured to encode the shift data.

In an implementation, the coding mode includes a first coding mode. The shift data includes a coding shift quotient and a coding shift remainder of the target coding information. When configured to perform shift processing on the target coding information based on the coding mode to obtain the shift data of the target coding information, the processing unit 902 is specifically configured to perform the following operations:

determining whether the target coding information satisfies a shift coding condition;

performing, if the target coding information satisfies the shift coding condition, shift processing on the target coding information to obtain the coding shift quotient and the coding shift remainder of the target coding information;

determining whether the coding shift quotient satisfies an indirect coding condition; and

determining, if the coding shift quotient satisfies the indirect coding condition, that indirect encoding processing is required to be performed on the coding shift quotient.

In an implementation, the coding mode includes a second coding mode. The shift data includes a coding shift quotient and a coding shift remainder of the target coding information. When configured to perform shift processing on the target coding information based on the coding mode to obtain the shift data of the target coding information, the processing unit 902 is specifically configured to perform the following operations:

determining whether the target coding information satisfies a shift coding condition; and

performing, if the target coding information satisfies the shift coding condition, shift processing on the target coding information to obtain the coding shift quotient and the coding shift remainder of the target coding information.

In an implementation, the coding mode includes a third coding mode. The shift data includes a coding shift quotient and a coding shift remainder of the target coding information. When configured to perform shift processing on the target coding information based on the coding mode to obtain the shift data of the target coding information, the processing unit 902 is specifically configured to perform the following operations:

performing shift processing on the target coding information to obtain the coding shift quotient and the coding shift remainder of the target coding information;

determining whether the coding shift quotient satisfies an indirect coding condition; and

determining, if the coding shift quotient satisfies the indirect coding condition, that indirect encoding processing is required to be performed on the coding shift quotient.

In an implementation, the coding mode includes a fourth coding mode. The shift data includes a coding shift quotient and a coding shift remainder of the target coding information. When configured to perform shift processing on the target coding information based on the coding mode to obtain the shift data of the target coding information, the processing unit 902 is specifically configured to perform the following operation:
performing shift processing on the target coding information to obtain the coding shift quotient and the coding shift remainder of the target coding information.

In an implementation, matching check is required to be performed on the target coding information and m1 specific values when whether the target coding information satisfies the shift coding condition is determined. The m1 specific values correspond to different coding information flag fields respectively, and m1 is a positive integer. When configured to determine whether the target coding information satisfies the shift coding condition, the processing unit 902 is specifically configured to perform the following operations:

performing matching check on the target coding information and an ith specific value in the m1 specific values, i being a positive integer less than m1;

setting, if the target coding information is not matched with the ith specific value, an ith coding information flag field corresponding to the ith specific value to a first value for coding, and performing matching check on the target coding information and an $(i+1)^{th}$ specific value in the m1 specific values, or determining, if the target coding information is matched with the ith specific value, that the target coding information does not satisfy the shift coding condition, and setting an ith coding information flag field to a second value for coding; and

when matching check is performed on an $m1^{th}$ specific value, setting, if the target coding information is not matched with the $m1^{th}$ specific value, an $m1^{th}$ coding information flag field corresponding to the $m1^{th}$ specific value to the first value for coding, and determining that the target coding information satisfies the shift coding condition, or determining, if the target coding information is matched with the $m1^{th}$ specific value, that the target coding information does not satisfy the shift coding condition, and setting an $m1^{th}$ coding information flag field to the second value for coding.

In an implementation, matching check is required to be performed on the coding shift quotient and m2 specific values when whether the coding shift quotient satisfies the indirect coding condition is determined. The m2 specific values correspond to different shift quotient flag fields respectively, and m2 is a positive integer. When configured to determine whether the coding shift quotient satisfies the indirect coding condition, the processing unit 902 is specifically configured to perform the following operations:

performing matching check on the coding shift quotient and a $j^{th}$ specific value in the m2 specific values, j being a positive integer less than m2;

setting, if the coding shift quotient is not matched with the $j^{th}$ specific value, a $j^{th}$ shift quotient flag field corresponding to the $j^{th}$ specific value to a first value for coding, and performing matching check on the coding shift quotient and a $(j+1)^{th}$ specific value in the m2 specific values, or determining, if the coding shift quotient is matched with the $j^{th}$ specific value, that the coding shift quotient does not satisfy the indirect coding condition, and setting a $j^{th}$ shift quotient flag field to a second value for coding; and

when matching check is performed on an $m2^{th}$ specific value, setting, if the coding shift quotient is not matched with the $m2^{th}$ specific value, an $m2^{th}$ shift quotient flag field corresponding to the $m2^{th}$ specific value to the first value for coding and determining that the coding shift quotient satisfies the indirect coding condition, or determining, if the coding shift quotient is matched with the $m2^{th}$ specific value, that the coding shift quotient does not satisfy the indirect coding condition, and setting an $m2^{th}$ shift quotient flag field to the second value for coding.

In an implementation, when configured to perform shift processing on the target coding information to obtain the coding shift quotient and the coding shift remainder of the target coding information, the processing unit 902 is specifically configured to perform the following operations:

obtaining shift bit count determining information and a shift bit count threshold;

determining a shift bit count based on a magnitude relationship between the shift bit count determining information and the shift bit count threshold; and

performing shift processing on the target coding information based on the shift bit count to obtain the coding shift quotient and the coding shift remainder of the target coding information.

In an implementation, when configured to perform shift processing on the target coding information to obtain the coding shift quotient and the coding shift remainder of the target coding information, the processing unit 902 is specifically configured to perform the following operations:

obtaining an initial shift bit count;

performing shift processing on the target coding information based on the initial shift bit count to obtain a reference shift quotient and a reference shift remainder of the target coding information; and

determining the reference shift quotient as the coding shift quotient and the reference shift remainder as the coding shift remainder if the reference shift quotient is less than a shift quotient threshold; or

updating the initial shift bit count if the reference shift quotient is greater than or equal to a shift quotient threshold, and performing shift processing on the target coding information based on an updated shift bit count until a reference shift quotient less than the shift quotient threshold is obtained through shift processing.

According to another embodiment of this application, each unit in the point cloud processing apparatuses shown in FIG. 9 may exist respectively or be combined into one or more other units. Alternatively, a specific (or some) unit in the units may be further split into a plurality of smaller function units, thereby implementing the same operations without affecting the technical effects of the embodiments of this application. The units are divided based on logical functions. In actual applications, a function of one unit may be implemented by a plurality of units, or functions of a plurality of units may be implemented by one unit. In another embodiment of this application, the point cloud processing apparatus may include other units. In actual applications, these functions may be implemented collaboratively by the other units, and may be implemented collaboratively by a plurality of units.

According to another embodiment of this application, a computer program (including program code) capable of performing each operation involved in a part or all of the method shown in FIG. 8 may be run in a general-purpose computing device, for example, a computer, including a processing element and a storage element, for example, a CPU 902, a RAM, or a ROM, to structure the point cloud processing apparatus shown in FIG. 9 and implement the point cloud processing method in the embodiments of this application. The computer program may be recorded in, for example, a computer-readable storage medium and loaded, through the computer-readable storage medium, and run in the computing device.

In this embodiment of this application, after the target coding information of the point cloud is obtained, shift processing may be performed on the target coding information to obtain the shift data of the target coding information, and then the shift data may be encoded. According to this embodiment of this application, shift processing is performed on the target coding information, so that a data volume encoded in an encoding phase of the point cloud can be reduced, and efficiency of encoding the point cloud can be improved.

Based on the method and apparatus embodiments, an embodiment of this application provides a computer device. The computer device may be the decoding device described above. Refer to FIG. 10. FIG. 10 is a schematic diagram of a structure of the computer device according to an embodiment of this application. The computer device shown in FIG. 10 includes at least a processor 1001, an input interface 1002, an output interface 1003, and a computer-readable storage medium 1004. The processor 1001, the input interface 1002, the output interface 1003, and the computer-readable storage medium 1004 may be connected through a bus or in another manner.

The computer-readable storage medium 1004 may be stored in a memory of the computer device. The computer-readable storage medium 1004 is configured to store a computer program. The computer program includes computer instructions. The processor 1001 is configured to execute the program instructions stored in the computer-readable storage medium 1004. As a computing core and a control core of the computer device, the processor 1001 (or referred to as a CPU) is configured to implement one or more computer instructions, specifically configured to load and execute the one or more computer instructions, thereby implementing corresponding method processes or corresponding functions.

An embodiment of this application further provides a computer-readable storage medium (memory). As a memory device in a computer device, the computer-readable storage medium is configured to store a program and data. The computer-readable storage medium herein may include a built-in storage medium of the computer device, or may definitely include an extended storage medium supported by the computer device. The computer-readable storage medium provides storage space storing an operating system of the computer device. Furthermore, one or more instructions suitable for a processor to load and execute are also stored in the storage space, and the computer instructions may be one or more computer programs (including program code). The computer-readable storage medium herein may be a high-speed RAM, or a non-volatile memory, for example, at least one disk memory. In some embodiments, the computer-readable storage medium may be at least one computer-readable storage medium far away from the processor.

In some embodiments, the processor 1001 loads and executes the one or more computer instructions stored in the computer-readable storage medium 1004, to implement the corresponding operations of the point cloud processing method shown in FIG. 7. In specific implementation, the computer instruction in the computer-readable storage medium 1004 is loaded and executed by the processor 1001 to implement the point cloud processing method at the decoder side or the point cloud processing method at the encoder side provided in the embodiments of this application, to improve efficiency of encoding and decoding a point cloud.

According to an aspect of this application, a computer program product or computer program is provided. The computer program product or computer program includes computer instructions. The computer instructions are stored in a computer-readable storage medium. A processor of a computer device reads the computer instructions from the computer-readable storage medium. The processor executes the computer instructions to enable the computer device to perform the point cloud processing method provided in various optional modes described above.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A point cloud processing method, performed by a computer device, the method comprising:

   obtaining coded data of a point cloud;
   analyzing the coded data to obtain shift data, the shift data being obtained by performing shift processing on target coding information of the point cloud in an encoding process of the point cloud; and
   performing shift reconstruction on the shift data to obtain reconstructed coding information of the target coding information.

2. The method according to claim 1, wherein the analyzing the coded data to obtain shift data comprises:

   obtaining a coding mode; and
   analyzing the coded data based on the coding mode to obtain the shift data.

3. The method according to claim 2, wherein the coding mode comprises a first coding mode; the shift data comprises a coding shift quotient and a coding shift remainder of the target coding information; the coded data comprises a coding information flag field; and the analyzing the coded data based on the coding mode to obtain the shift data comprises:

   analyzing the coding information flag field, and determining whether an analytic value of the coding information flag field satisfies a shift analysis condition;
   analyzing, when the analytic value of the coding information flag field satisfies the shift analysis condition, in which case the coded data further comprises a shift quotient flag field, the shift quotient flag field, and determining whether an analytic value of the shift quotient flag field satisfies an indirect analysis condition; and
   analyzing, when the analytic value of the shift quotient flag field satisfies the indirect analysis condition, in which case the coded data further comprises a coding result of the coding shift quotient and a coding result of the coding shift remainder, the coding result of the coding shift quotient to obtain the coding shift quotient, and analyzing the coding result of the coding shift remainder to obtain the coding shift remainder.

4. The method according to claim 2, wherein the coding mode comprises a second coding mode; the shift data comprises a coding shift quotient and a coding shift remainder of the target coding information; the coded data comprises a coding information flag field; and the analyzing the coded data based on the coding mode to obtain the shift data comprises:

   analyzing the coding information flag field, and determining whether an analytic value of the coding information flag field satisfies a shift analysis condition; and
   analyzing, when the analytic value of the coding information flag field satisfies the shift analysis condition, in which case the coded data further comprises a coding result of the coding shift quotient and a coding result of the coding shift remainder, the coding result of the coding shift quotient to obtain the coding shift quotient, and analyzing the coding result of the coding shift remainder to obtain the coding shift remainder.

5. The method according to claim 2, wherein the coding mode comprises a third coding mode; the shift data comprises a coding shift quotient and a coding shift remainder; the coded data comprises a shift quotient flag field; and the analyzing the coded data based on the coding mode to obtain the shift data comprises:

analyzing the shift quotient flag field, and determining whether an analytic value of the shift quotient flag field satisfies an indirect analysis condition for discrimination; and
analyzing, when the analytic value of the shift quotient flag field satisfies the indirect analysis condition, in which case the coded data further comprises a coding result of the coding shift quotient and a coding result of the coding shift remainder, the coding result of the coding shift quotient to obtain the coding shift quotient, and analyzing the coding result of the coding shift remainder to obtain the coding shift remainder.

6. The method according to claim 2, wherein the coding mode comprises a fourth coding mode; the shift data comprises a coding shift quotient and a coding shift remainder; the coded data comprises a coding result of the coding shift quotient and a coding result of the coding shift remainder; and the analyzing the coded data based on the coding mode to obtain the shift data comprises:

analyzing the coding result of the coding shift quotient to obtain the coding shift quotient; and
analyzing the coding result of the coding shift remainder to obtain the coding shift remainder.

7. The method according to claim 3 or 4, wherein a quantity of coding information flag fields is m1, each coding information flag field corresponds to a different specific value, and m1 is a positive integer; and the analyzing the coding information flag field, and determining whether an analytic value of the coding information flag field satisfies a shift analysis condition comprises:

analyzing an $i^{th}$ coding information flag field in the m1 coding information flag fields, i being a positive integer less than m1;
analyzing an $(i+1)^{th}$ coding information flag field when an analytic value of the $i^{th}$ coding information flag field is a first value, or determining, when an analytic value of the $i^{th}$ coding information flag field is a second value, that the coding information flag field does not satisfy the shift analysis condition, and determining the reconstructed coding information of the target coding information to be an $i^{th}$ specific value, the $i^{th}$ specific value corresponding to the $i^{th}$ coding information flag field; and
when an $m1^{th}$ coding information flag field is analyzed, determining when an analytic value of the $m1^{th}$ coding information flag field is the first value, that the analytic value of the coding information flag field satisfies the shift analysis condition, or determining, when an analytic value of the $m1^{th}$ coding information flag field is the second value, that the coding information flag field does not satisfy the shift analysis condition, and determining the reconstructed coding information of the target coding information to be an $m1^{th}$ specific value, the $m1^{th}$ specific value corresponding to the $m1^{th}$ coding information flag field.

8. The method according to claim 7, wherein the performing shift reconstruction on the shift data to obtain reconstructed coding information of the target coding information comprises:

performing shift reconstruction on the shift data to obtain initial reconstructed information of the target coding information; and
updating the initial reconstructed information with a reference value associated with the $m1^{th}$ specific value, to obtain the reconstructed coding information of the target coding information.

9. The method according to claim 3 or 5, wherein a quantity of shift quotient flag fields is m2, each shift quotient flag field corresponds to a different specific value, and m2 is a positive integer; and the analyzing the shift quotient flag field, and determining whether an analytic value of the shift quotient flag field satisfies an indirect analysis condition comprises:

analyzing a $j^{th}$ shift quotient flag field in the m2 shift quotient flag fields, j being a positive integer less than m2;
analyzing a $(j+1)^{th}$ shift quotient flag field when an analytic value of the $j^{th}$ shift quotient flag field is a first value, or determining, when an analytic value of the $j^{th}$ shift quotient flag field is a second value, that the shift quotient flag field does not satisfy the indirect analysis condition, and determining the coding shift quotient to be a $j^{th}$ specific value, the $j^{th}$ specific value corresponding to the $j^{th}$ shift quotient flag field; and

when an $m2^{th}$ shift quotient flag field is analyzed, determining, when an analytic value of the $m2^{th}$ shift quotient flag field is the first value, that the analytic value of the shift quotient flag field satisfies the indirect analysis condition, or determining, when an analytic value of the $m2^{th}$ shift quotient flag field is the second value, that the shift quotient flag field does not satisfy the indirect analysis condition, and determining the coding shift quotient to be an $m2^{th}$ specific value, the $m2^{th}$ specific value corresponding to the $m2^{th}$ shift quotient flag field.

10. The method according to claim 9, wherein after the analyzing the coding result of the coding shift quotient to obtain the coding shift quotient, the method further comprises:

updating the coding shift quotient with a target value correlated with the $m2^{th}$ specific value.

11. The method according to any one of claims 3 to 6, wherein the analyzing the coding result of the coding shift quotient to obtain the coding shift quotient comprises:

analyzing the coding result of the coding shift quotient based on an exponential-Golomb coding mode to obtain the coding shift quotient, an order for the exponential-Golomb coding mode being a $K1^{th}$ order, and K1 being a nonnegative integer; or
analyzing the coding result of the coding shift quotient based on a bit coding mode to obtain the coding shift quotient; and
the analyzing the coding result of the coding shift remainder to obtain the coding shift remainder comprises:

analyzing the coding result of the coding shift remainder based on the bit coding mode to obtain the coding shift remainder; or
analyzing the coding result of the coding shift remainder based on the exponential-Golomb coding mode to obtain the coding shift remainder, the order for the exponential-Golomb coding mode being a $K2^{th}$ order, and K2 being a positive integer.

12. The method according to claim 11, wherein the coding result of the coding shift quotient comprises a coding result of an occupancy bit of the coding shift quotient and a code of each bit occupied by the coding shift quotient; and

the analyzing the coding result of the coding shift quotient based on a bit coding mode to obtain the coding shift quotient comprises:

analyzing the coding result of the occupancy bit of the coding shift quotient to obtain the occupancy bit of the coding shift quotient;
analyzing the code of each bit occupied by the coding shift quotient to obtain a value of each bit occupied by the coding shift quotient; and
reconstructing the coding shift quotient based on the value of each bit occupied by the coding shift quotient.

13. The method according to claim 12, wherein the analyzing the coding result of the occupancy bit of the coding shift quotient to obtain the occupancy bit of the coding shift quotient comprises:

analyzing the coding result of the occupancy bit based on the bit coding mode to obtain the coding shift quotient;
analyzing the coding result of the occupancy bit based on the exponential-Golomb coding mode to obtain the occupancy bit of the coding shift quotient, the order for the exponential-Golomb coding mode being a $K3^{th}$ order, and K3 being a nonnegative integer; or
analyzing the coding result of the occupancy bit based on a shift coding mode to obtain the occupancy bit of the coding shift quotient.

14. The method according to claim 13, wherein the coding result of the occupancy bit comprises a coding result of an occupancy shift quotient of the occupancy bit and a coding result of an occupancy shift remainder, and the occupancy shift quotient and the occupancy shift remainder are obtained by performing shift processing on the occupancy bit; and

the analyzing the coding result of the occupancy bit based on a shift coding mode to obtain the occupancy bit of the coding shift quotient comprises:

analyzing the coding result of the occupancy shift quotient to obtain the occupancy shift quotient;
analyzing the coding result of the occupancy shift remainder to obtain the occupancy shift remainder; and
performing shift reconstruction processing on the occupancy shift quotient and the occupancy shift remainder to obtain the occupancy bit of the coding shift quotient.

15. The method according to claim 14, wherein the analyzing the coding result of the occupancy shift quotient to obtain the occupancy shift quotient comprises:

analyzing the coding result of the occupancy shift quotient based on the bit coding mode to obtain the occupancy shift quotient; or
analyzing the coding result of the occupancy shift quotient based on the exponential-Golomb coding mode to obtain the occupancy shift quotient, the order for the exponential-Golomb coding mode being a $K4^{th}$ order, and K4 being a nonnegative integer; and
the analyzing the coding result of the occupancy shift remainder to obtain the occupancy shift remainder comprises:

analyzing the coding result of the occupancy shift remainder based on the bit coding mode to obtain the occupancy shift remainder; or
analyzing the coding result of the occupancy shift remainder based on the exponential-Golomb coding mode to obtain the occupancy shift remainder, the order for the exponential-Golomb coding mode being a $K5^{th}$ order, and K5 being a nonnegative integer.

16. The method according to claim 1, wherein the shift data comprises a coding shift quotient and a coding shift remainder; and the performing shift reconstruction on the shift data to obtain reconstructed coding information of the target coding information comprises:

determining a shift bit count;
performing shift processing on the coding shift quotient based on the shift bit count to obtain a shifted coding shift quotient; and
adding the shifted coding shift quotient and the coding shift remainder to obtain the reconstructed coding information of the target coding information.

17. The method according to claim 16, wherein the determining a shift bit count comprises:

obtaining shift bit count determining information and a shift bit count threshold; and
determining the shift bit count based on a magnitude relationship between the shift bit count determining information and the shift bit count threshold.

18. The method according to claim 1, wherein the method further comprises:
determining an order for an exponential-Golomb coding mode when an analysis process of the coded data relates to an exponential-Golomb coding mode-based analysis process.

19. The method according to claim 18, wherein the determining an order for an exponential-Golomb coding mode comprises any one of the following:

setting, by default by an encoder side and a decoder side, the order for the exponential-Golomb coding mode;
analyzing a coding parameter set or a coded bitstream of the point cloud to obtain the order for the exponential-Golomb coding mode; and
determining the order for the exponential-Golomb coding mode based on a data feature of the target coding information.

20. The method according to claim 19, wherein the determining the order for the exponential-Golomb coding mode based on a data feature of the target coding information comprises:

determining an initial order; and
adjusting the initial order or a current order based on the data feature of the target coding information to determine the order for the exponential-Golomb coding mode.

21. The method according to claim 18, wherein when the analysis process of the coded data relates to a plurality of exponential-Golomb coding mode-based analysis processes, orders for respective exponential-Golomb coding modes are associated with or independent of each other; and that the orders for the respective exponential-Golomb coding modes are associated with each other comprises:
the orders for the respective exponential-Golomb coding modes are the same; or the orders for the respective exponential-Golomb coding modes are associated through an offset parameter.

22. A point cloud processing method, performed by a computer device, the method comprising:

   obtaining target coding information of a point cloud;
   obtaining a coding mode;
   performing shift processing on the target coding information based on the coding mode to obtain shift data of the target coding information; and
   encoding the shift data.

23. The method according to claim 22, wherein the coding mode comprises a first coding mode; the shift data comprises a coding shift quotient and a coding shift remainder of the target coding information; and the performing shift processing on the target coding information based on the coding mode to obtain shift data of the target coding information comprises:

   determining whether the target coding information satisfies a shift coding condition;
   performing, when the target coding information satisfies the shift coding condition, shift processing on the target coding information to obtain the coding shift quotient and the coding shift remainder of the target coding information;
   determining whether the coding shift quotient satisfies an indirect coding condition; and
   determining, when the coding shift quotient satisfies the indirect coding condition, that indirect encoding processing is required to be performed on the coding shift quotient.

24. The method according to claim 22, wherein the coding mode comprises a second coding mode; the shift data comprises a coding shift quotient and a coding shift remainder of the target coding information; and the performing shift processing on the target coding information based on the coding mode to obtain shift data of the target coding information comprises:

   determining whether the target coding information satisfies a shift coding condition; and
   performing, when the target coding information satisfies the shift coding condition, shift processing on the target coding information to obtain the coding shift quotient and the coding shift remainder of the target coding information.

25. The method according to claim 22, wherein the coding mode comprises a third coding mode; the shift data comprises a coding shift quotient and a coding shift remainder of the target coding information; and the performing shift processing on the target coding information based on the coding mode to obtain shift data of the target coding information comprises:

   performing shift processing on the target coding information to obtain the coding shift quotient and the coding shift remainder of the target coding information;
   determining whether the coding shift quotient satisfies an indirect coding condition; and
   determining, when the coding shift quotient satisfies the indirect coding condition, that indirect encoding processing is required to be performed on the coding shift quotient.

26. The method according to claim 22, wherein the coding mode comprises a fourth coding mode; the shift data comprises a coding shift quotient and a coding shift remainder of the target coding information; and the performing shift processing on the target coding information based on the coding mode to obtain shift data of the target coding information comprises:
   performing shift processing on the target coding information to obtain the coding shift quotient and the coding shift remainder of the target coding information.

27. The method according to claim 23 or 24, wherein matching check is performed on the target coding information and m1 specific values when whether the target coding information satisfies the shift coding condition is determined, the m1 specific values correspond to different coding information flag fields respectively, and m1 is a positive integer; and the determining whether the target coding information satisfies a shift coding condition comprises:

   performing matching check on the target coding information and an $i^{th}$ specific value in the m1 specific values, i being a positive integer less than m1;

setting, when the target coding information is not matched with the $i^{th}$ specific value, an $i^{th}$ coding information flag field corresponding to the $i^{th}$ specific value to a first value for coding, and performing matching check on the target coding information and an $(i+1)^{th}$ specific value in the m1 specific values, or determining, when the target coding information is matched with the $i^{th}$ specific value, that the target coding information does not satisfy the shift coding condition, and setting an $i^{th}$ coding information flag field to a second value for coding; and

when matching check is performed on an $m1^{th}$ specific value, setting, when the target coding information is not matched with the $m1^{th}$ specific value, an $m1^{th}$ coding information flag field corresponding to the $m1^{th}$ specific value to the first value for coding and determining that the target coding information satisfies the shift coding condition, or determining, when the target coding information is matched with the $m1^{th}$ specific value, that the target coding information does not satisfy the shift coding condition, and setting an $m1^{th}$ coding information flag field to the second value for coding.

28. The method according to claim 23 or 25, wherein matching check is performed on the coding shift quotient and m2 specific values when whether the coding shift quotient satisfies the indirect coding condition is determined, the m2 specific values correspond to different shift quotient flag fields respectively, and m2 is a positive integer; and the determining whether the coding shift quotient satisfies an indirect coding condition comprises:

performing matching check on the coding shift quotient and a $j^{th}$ specific value in the m2 specific values, j being a positive integer less than m2;

setting, when the coding shift quotient is not matched with the $j^{th}$ specific value, a $j^{th}$ shift quotient flag field corresponding to the $j^{th}$ specific value to a first value for coding, and performing matching check on the coding shift quotient and a $(j+1)^{th}$ specific value in the m2 specific values, or determining, when the coding shift quotient is matched with the $j^{th}$ specific value, that the coding shift quotient does not satisfy the indirect coding condition, and setting a $j^{th}$ shift quotient flag field to a second value for coding; and

when matching check is performed on an $m2^{th}$ specific value, setting, when the coding shift quotient is not matched with the $m2^{th}$ specific value, an $m2^{th}$ shift quotient flag field corresponding to the $m2^{th}$ specific value to the first value for coding, and determining that the coding shift quotient satisfies the indirect coding condition, or determining, when the coding shift quotient is matched with the $m2^{th}$ specific value, that the coding shift quotient does not satisfy the indirect coding condition, and setting an $m2^{th}$ shift quotient flag field to the second value for coding.

29. The method according to any one of claims 23 to 26, wherein the performing shift processing on the target coding information to obtain the coding shift quotient and the coding shift remainder of the target coding information comprises:

obtaining shift bit count determining information and a shift bit count threshold;
determining a shift bit count based on a magnitude relationship between the shift bit count determining information and the shift bit count threshold; and
performing shift processing on the target coding information based on the shift bit count to obtain the coding shift quotient and the coding shift remainder of the target coding information.

30. The method according to any one of claims 23 to 26, wherein the performing shift processing on the target coding information to obtain the coding shift quotient and the coding shift remainder of the target coding information comprises:

obtaining an initial shift bit count;
performing shift processing on the target coding information based on the initial shift bit count to obtain a reference shift quotient and a reference shift remainder of the target coding information; and
determining the reference shift quotient as the coding shift quotient and the reference shift remainder as the coding shift remainder when the reference shift quotient is less than a shift quotient threshold; or
updating the initial shift bit count when the reference shift quotient is greater than or equal to a shift quotient threshold, and performing shift processing on the target coding information based on an updated shift bit count until a reference shift quotient less than the shift quotient threshold is obtained through shift processing.

31. A point cloud processing apparatus, the point cloud processing apparatus comprising:

an obtaining unit, configured to obtain coded data of a point cloud; and
a processing unit, configured to analyze the coded data to obtain shift data, the shift data being obtained by performing shift processing on target coding information of the point cloud in an encoding process of the point cloud, and
the processing unit being further configured to perform shift reconstruction on the shift data to obtain reconstructed coding information of the target coding information.

32. A point cloud processing apparatus, the point cloud processing apparatus comprising:

an obtaining unit, configured to obtain target coding information of a point cloud,
the obtaining unit being further configured to obtain a coding mode; and
a processing unit, configured to perform shift processing on the target coding information based on the coding mode to obtain shift data of the target coding information,
the processing unit being further configured to encode the shift data.

33. A computer device, the computer device comprising:

a processor, configured to implement a computer program; and
a computer-readable storage medium, the computer-readable storage medium storing the computer program, and the computer program being configured for the processor to load and execute to implement the point cloud processing method according to any one of claims 1 to 21 or to implement the point cloud processing method according to any one of claims 22 to 30.

34. A computer-readable storage medium, the computer-readable storage medium storing a computer program, and the computer program being configured for a processor to load and execute to implement the point cloud processing method according to any one of claims 1 to 21 or to implement the point cloud processing method according to any one of claims 22 to 30.

35. A computer program product, the computer program product comprising computer instructions, and the computer instructions, when executed by a processor, implementing the point cloud processing method according to any one of claims 1 to 21 or implement the point cloud processing method according to any one of claims 22 to 30.

Geometric information                                    Attribute information

```
┌─────────────────────────────────────────────────────────────────────────┐
│                                                                           │
│   ┌──────────────────────┐              ┌──────────────────────┐          │
│   │  Coordinate transform │              │    Color transform   │          │
│   └──────────────────────┘              └──────────────────────┘          │
│                                                                           │
│   ┌──────────────────────┐              ┌──────────────────────┐          │
│   │      Voxelization     │ ──────────▶  │   Attribute transform │          │
│   └──────────────────────┘              └──────────────────────┘          │
│                                                                           │
│   ┌──────────────────────┐  ┌──────────┐  ┌──────────────┐ ┌──────────┐   │
│   │    Octree analysis    │  │ Geometry │  │  Predictive  │ │Transform │   │
│   └──────────────────────┘  │ recon-   │  │   coding/     │ │ coding   │   │
│                             │ struction│  │  predicting   │ └──────────┘   │
│   ┌──────────────────────┐  │          │  │transform coding│               │
│   │    Prediction tree    │  │          │  └──────────────┘                │
│   └──────────────────────┘  └──────────┘                                   │
│                                          ┌──────────────────────┐          │
│                                          │     Quantization      │          │
│   ┌──────────────────────┐              └──────────────────────┘          │
│   │    Arithmetic coding  │              ┌──────────────────────┐          │
│   └──────────────────────┘              │   Arithmetic coding   │          │
│                                          └──────────────────────┘          │
│                                                                           │
└─────────────────────────────────────────────────────────────────────────┘
```

Geometric bitstream                                      Attribute bitstream

## FIG. 1a

Original point cloud

Attribute information

Geometric
information

Coordinate
transform

Voxelization

Octree model

Prediction
model

Triangular
model

Geometry
reconstruction

Attribute
transform

Recoloring

Division

Region
adaptive
hierarchical
coding

Lifting
transform
coding

Predicting
transform
coding

Quantization

Arithmetic coding

Geometric bitstream

Attribute bitstream

FIG. 1b

FIG. 2

FIG. 3

FIG. 4

FIG. 5a

FIG. 5b

FIG. 6

Oobtain coded data of a point cloud — S701

Analyze the coded data to obtain shift data, the shift data being obtained by performing shift processing on target coding information of the point cloud in an encoding process of the point cloud — S702

Perform shift reconstruction on the shift data to obtain reconstructed coding information of the target coding information — S703

FIG. 7

Obtain target coding information of a point cloud — S801

Perform shift processing on the target coding information to obtain shift data of the target coding information — S802

Encode the shift data — S803

FIG. 8

901

902

| Obtaining unit | Processing unit |

Point cloud processing apparatus

FIG. 9

1004

1001

1002

Program instruction 1

Program instruction 2

⋮

Program instruction n

Processor

Input interface

1003

Output interface

Computer-readable storage medium

Computer device

FIG. 10

## INTERNATIONAL SEARCH REPORT

| International application No. |
| --- |
| **PCT/CN2023/096242** |

| A. | CLASSIFICATION OF SUBJECT MATTER |
| --- | --- |

H04N 13/161(2018.01)i

According to International Patent Classification (IPC) or to both national classification and IPC

| B. | FIELDS SEARCHED |
| --- | --- |

Minimum documentation searched (classification system followed by classification symbols)

IPC：H04N

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT: 点云, 编码, 目标, 移位, 数据, 模式, 标志, 字段, 商, 余数, 重建, point cloud, encode, compression, target, shift, data, mode, ID, flag, field, quotient, remainder, reconstruction

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115379190 A (TENCENT TECHNOLOGY (SHENZHEN) CO., LTD.) 22 November 2022 (2022-11-22) claims 1-34, and description, paragraph 0671 | 1-35 |
| X | WO 2021108970 A1 (GUANGDONG OPPO MOBILE TELECOMMUNICATIONS CORP., LTD.) 10 June 2021 (2021-06-10) description, pages 1-14, and figures 1-12 | 1, 2, 16-22, 31-35 |
| A | CN 113826385 A (OPPO GUANGDONG MOBILE TELECOMMUNICATIONS CO., LTD.) 21 December 2021 (2021-12-21) entire document | 1-35 |
| A | WO 2022067775 A1 (GUANGDONG OPPO MOBILE TELECOMMUNICATIONS CORP., LTD.) 07 April 2022 (2022-04-07) entire document | 1-35 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 September 2023** | **24 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/096242**

| Patent document cited in search report | | | Publication date (day/month/year) | Patent family member(s) | | | Publication date (day/month/year) |
|---|---|---|---|---|---|---|---|
| CN | 115379190 | A | 22 November 2022 | None | | | |
| WO | 2021108970 | A1 | 10 June 2021 | EP | 4071714 | A1 | 12 October 2022 |
| | | | | EP | 4071714 | A4 | 15 February 2023 |
| | | | | US | 2022286677 | A1 | 08 September 2022 |
| CN | 113826385 | A | 21 December 2021 | JP | 2022539411 | A | 08 September 2022 |
| | | | | US | 2022124374 | A1 | 21 April 2022 |
| | | | | US | 11509939 | B2 | 22 November 2022 |
| | | | | US | 2023047499 | A1 | 16 February 2023 |
| | | | | WO | 2021000658 | A1 | 07 January 2021 |
| | | | | US | 2023058703 | A1 | 23 February 2023 |
| | | | | EP | 3979638 | A1 | 06 April 2022 |
| | | | | EP | 3979638 | A4 | 21 September 2022 |
| | | | | KR | 20220029595 | A | 08 March 2022 |
| WO | 2022067775 | A1 | 07 April 2022 | US | 2023237707 | A1 | 27 July 2023 |
| | | | | EP | 4224843 | A1 | 09 August 2023 |

Form PCT/ISA/210 (patent family annex) (July 2022)

**EP 4 576 766 A1**

**REFERENCES CITED IN THE DESCRIPTION**

**Patent documents cited in the description**

- CN 202211001666X